# EUROPÄISCHE PATENTSCHRIFT

(11) **EP 3 224 075 B1**
(45) Veröffentlichungstag und Bekanntmachung des Hinweises auf die Patenterteilung: **12.09.2018**
(21) Anmeldenummer: 15781943.4
(22) Anmeldetag: 20.10.2015
(51) Int. Cl.: B60K 6/28, H02M 7/483, H02M 7/487, H02J 7/34

(54) **BATTERIESYSTEM MIT EINER HYBRIDEN BATTERIE UND EINEM EINGANGSSEITIG MIT DER BATTERIE VERBUNDENEN NPC-WECHSELRICHTER UND VERFAHREN ZUM BETREIBEN EINES EINGANGSSEITIG MIT EINER HYBRIDEN BATTERIE VERBUNDENEN NPC-WECHSELRICHTERS**
BATTERY SYSTEM COMPRISING A HYBRID BATTERY AND AN NPC INVERTER WHICH IS CONNECTED ON THE INPUT SIDE TO THE BATTERY, AND METHOD FOR OPERATING AN NPC INVERTER WHICH IS CONNECTED ON THE INPUT SIDE TO A HYBRID BATTERY
SYSTÈME DE BATTERIE AYANT UNE BATTERIE HYBRIDE ET ONDULEUR NPC RELIÉ À LA BATTERIE COTÉ ENTRÉE ET PROCÉDÉ POUR FAIRE FONCTIONNER UN ONDULEUR NPC RELIÉ À LA BATTERIE COTÉ ENTRÉE

(30) Priorität: 28.11.2014 DE 102014224371
(43) Veröffentlichungstag der Anmeldung: 04.10.2017
(73) Patentinhaber: Robert Bosch GmbH, 70442 Stuttgart (DE)
(72) Erfinder: DOEGE, Volker, 89561 Dischingen (DE); SAHHARY, Waleed, 71254 Ditzingen (DE); WOLL, Christoph, 70839 Gerlingen (DE)
(86) Internationale Anmeldenummer: PCT/EP2015/074251
(87) Internationale Veröffentlichungsnummer: WO 2016/083025

(56) Entgegenhaltungen:
- DE-A1-102008 037 064
- DE-A1-102009 031 295
- DE-A1-102012 208 945
- US-A1- 2008 245 587

## Beschreibung

Die vorliegende Erfindung betrifft ein Batteriesystem mit einer hybriden Batterie und einem Wechselrichter, der eingangsseitig mit der Batterie verbunden ist. Auch betrifft die Erfindung ein Verfahren zum Betreiben eines eingangsseitig mit einer hybriden Batterie verbundenen Wechselrichters. Ferner betrifft die Erfindung ein Fahrzeug mit einem solchen Batteriesystem und einem ausgangsseitig an den Wechselrichter angeschlossenen Elektromotor.

### Stand der Technik

Aus dem Stand der Technik sind NPC-Wechselrichter (NPC-Inverter) mit mindestens drei Spannungsniveaus (Spannungspegel) bekannt, die auch als Neutral-Point-Clamped-Diode-Multilevel-Inverter (NPC) mit mindestens drei Spanungsniveaus bezeichnet werden. Ein solcher NPC-Wechselrichter mit einer Anzahl n von Spannungsniveaus wird über n-1 Spannungsquellen beziehungsweise Energiespeicherquellen mit elektrischer Energie versorgt. Die von den Spannungsquellen beziehungsweise Energiespeicherquellen erzeugten Gleichspannungen werden dem NPC-Wechselrichter jeweils über einen geeigneten Zwischenkreis als eine entsprechende Zwischenkreisspannung eingangsseitig bereitgestellt. Dabei müssen die Zwischenkreisspannungen abgestimmt werden, da die Zwischenkreisspannungen gleich groß sein müssen. Ein Abstimmen der Zwischenkreisspannungen kann entweder aktiv oder passiv mittels Hardware oder über eine geeignete Raumzeigermodulation mittels Software erfolgen. Bei solchen NPC-Wechselrichtern werden Transistoren, die derselben Halbleitertechnologie angehören, als Halbleiterschalter eingesetzt.

In einem heutigen hybriden Batteriesystem können unterschiedliche Energiespeicherquellen einer verwendeten hybriden Batterie elektrisch passiv miteinander verknüpft werden, das heißt, parallel oder gegebenenfalls auch seriell miteinander geschaltet werden. Auch können solche unterschiedliche Energiespeicherquellen elektrisch aktiv miteinander verknüpft werden, wie beispielsweise über einen Gleichspannungswandler.

Mit Wechselrichtern, deren Halbeiterschalter in einer B6-Brücke angeordnet sind und die heutzutage bei der Verschaltung von unterschiedlichen Energiespeicherquellen eingesetzt werden, ist eine Verwendung unterschiedlicher Energiespeicherquellen, die beispielsweise in hybriden Batteriesystemen vorkommen, nur begrenzt möglich. Dies ist der Fall, der der Wirkungsgrad einer aus unterschiedlichen Energiespeicherquellen ausgebildeten hybriden Batterie einerseits sehr stark über einen gesamten Arbeitsbereich eines mittels eines solchen Wechselrichters betriebenen Elektromotors schwankt und andererseits relativ gering ist. Nachteilig ist auch, dass der Ausfall einer einzelnen Energiespeicherzelle oder eines einzelnen Schalters zum Ausfall eines gesamten elektrischen Antriebstrangs eines von der hybriden Batterie mit elektrischer Energie versorgten Elektromotors führt. Auch werden immer alle Energiespeicherzellen der Energiespeicherquellen zur Bestromung des Elektromotors herangezogen, selbst wenn diese nicht zur Erzeugung einer von dem Elektromotor angeforderten Spannungslage benötigt werden. Dies wirkt sich nachteilig auf die Lebensdauer der Energiespeicherzellen aus.

Dokument DE 10 2012 208 945 A1 beschreibt eine Stromquelleneinrichtung mit mehreren Stromquelleneinheiten, die jeweils wenigstens eine Teilstromquelle aufweisen. Die Stromquelleneinrichtung weist ferner zwei Ausgangsanschlüsse zum elektrischen Verbinden der Stromquelleneinrichtung mit wenigstens einer elektrischen Einrichtung auf. Jede der Stromquelleneinheiten weist eine Schalteinrichtung auf, sodass zum Einstellen der während eines Arbeitstakts an den Ausgangsanschlüssen anliegenden elektrischen Spannung eine vorgegebene Anzahl von jeweils logisch aufeinanderfolgenden Stromquelleneinheiten in Reihe schaltbar ist. Dabei stehen nur die in Reihe geschalteten Stromquelleneinheiten in elektrischer Verbindung mit beiden Ausgangsanschlüssen. Die Stromquelleneinrichtung ist dazu ausgebildet, in dem Arbeitstakt zunächst eine der Stromquelleneinheiten als Ausgangsstromquelle auszuwählen und mit logisch nachfolgenden Stromquelleneinheiten zum Erreichen der vorgegebenen Anzahl in Reihe zu schalten. Die Ausgangsstromquelle wird in zumindest einer Betriebsart der Stromquelleneinrichtung für verschiedene Arbeitstakte unterschiedlich gewählt. Die Teilstromquellen können als Batterien beziehungsweise Akkumulatoren ausgeführt sein. Um ein Versorgen der elektrischen Einrichtung mit Wechselspannung bei einer derartigen Stromquelleneinrichtung zu ermöglichen, kann zwischen den Ausgangsanschlüssen und der elektrischen Einrichtung ein Polwendeschalter, beispielsweise in Form einer H-Vollbrücke, vorgesehen sein. Der Polwendeschalter kann selbstverständlich alternativ auch in die Stromquelleneinrichtung integriert sein, also zwischen den Stromquelleneinheiten und den Ausgangsanschlüssen vorliegen.

Dokument DE 10 2008 037 064 A1 beschreibt eine Anordnung zum Parallelbetrieb von Energiespeichern ohne Überlappungsbereich der Betriebsspannungen. Die Anordnung umfasst eine Doppelschichtkondensatorquelle hoher Spannung, eine Brennstoffzelle niedriger Spannung, einen ersten Wechselrichter, einen zweiten Wechselrichter und eine Elektromaschine. Ein singulärer Betrieb der Elektromaschine an der Doppelschichtkondensatorquelle (generatorisch beziehungsweise motorisch bei passiver Brennstoffzelle) erfolgt durch eine geeignete Ansteuerung des zweiten Wechselrichters. Für diesen Betrieb ist es möglich, den ersten Wechselrichter zwischen der Brennstoffzelle und der Elektromaschine stillzulegen (Impulssperre) oder synchron zum zweiten Wechselrichter der Doppelschichtkondensatorquelle anzusteuern, ohne dass der Zweig der Brennstoffzelle die Funktion beeinflusst. Ein singulärer Betrieb der Elektromaschine an der Brennstoffzelle (motorisch bei passiver Doppelschichtkondensatorquelle) erfolgt durch Ansteuerung des ersten Wechselrichters bei inaktivem zweitem Wechselrichter (Impulssperre). Wegen einer Diode zwischen der Brennstoffzelle und dem ersten Wechselrichter wird eine auch nur temporäre Rückspeisung einer Energie in die Brennstoffzelle verhindert. Die vier Betriebsfälle (motorisch über die Brennstoffzelle, motorisch über die Doppelschichtkondensatorquelle, generatorisch über die Doppelschichtkondensatorquelle und Laden der Doppelschichtkondensatorquelle aus der Brennstoffzelle) können wechselseitig überlagert werden. Bei einem Ausfall einer Energiequelle kann eine andere Energiequelle einen Notbetrieb übernehmen.

Das Dokument DE 10 2009 031 295 A1 beschreibt eine Energiespeichervorrichtung, die zur Speicherung elektrischer Energie für den teilweise oder vollständigen elektrischen Antrieb eines Fahrzeugs Energiespeicher und Leistungsspeicher aufweist. Der Innenwiderstand der Energiespeicher ist größer als der Innenwiderstand der Leistungsspeicher. Dabei ist ein Stromsteller vorgesehen, welcher einen zwischen den Energiespeichern und den Leistungsspeichern fließenden Strom begrenzt.

Das Dokument US 2008/0245587 A1 beschreibt eine Leistungsquelle mit zwei Batteriemodulen, die unterschiedliche chemische Eigenschaften aufweisen. Die Batteriemodule können sowohl in Reihe als auch parallel geschaltet werden.

### Offenbarung der Erfindung

Erfindungsgemäß wird ein Batteriesystem nach Anspruch 1 bereitgestellt, das eine hybride Batterie aufweist, die eine erste Energiespeicherquelle mit mehreren ersten Energiespeicherzellen und eine in Reihe mit der ersten Energiespeicherquelle geschaltete zweite Energiespeicherquelle mit mehreren gegenüber den ersten Energiespeicherzellen unterschiedlich ausgebildeten zweiten Energiespeicherzellen umfasst. Das Batteriesystem umfasst ferner einen Wechselrichter, der eingangsseitig mit der Batterie verbunden und dazu ausgebildet ist, eine eingangsseitig anliegende Gleichspannung in eine ausgangsseitig anliegende Wechselspannung umzuwandeln. Bevorzugt ist die Wechselspannung eine mehrphasige, insbesondere dreiphasige, Wechselspannung. Das Batteriesystem weist auch eine Steuereinheit auf, die dazu ausgebildet ist, durch Steuern von mehreren Halbleiterschaltern des Wechselrichters den Wechselrichter in einem ersten Funktionsmodus oder in einem zweiten Funktionsmodus oder in einem dritten Funktionsmodus zu betreiben. Dabei wandelt der in dem ersten Funktionsmodus betriebene Wechselrichter eine von der ersten Energiespeicherquelle bereitgestellte eingangsseitig anliegende Gleichspannung in die ausgangsseitig anliegende Wechselspannung um. Ferner wandelt der in dem zweiten Funktionsmodus betriebene Wechselrichter eine von der zweiten Energiespeicherquelle bereitgestellte eingangsseitig anliegende Gleichspannung in die ausgangsseitig anliegende Wechselspannung um. Weiterhin wandelt der in dem dritten Funktionsmodus betriebene Wechselrichter eine von einer Reihenschaltung der ersten Energiespeicherquelle und der zweiten Energiespeicherquelle bereitgestellte eingangsseitig anliegende Gleichspannung in die ausgangsseitig anliegende Wechselspannung um. Die mehreren Halbleiterschalter sind in einer ersten Halbleiterschaltergruppe mit mehreren ersten Halbleiterschaltern und in einer zweiten Halbleiterschaltergruppe mit mehreren zweiten Halbleiterschaltern angeordnet. Dabei sind die ersten Halbleiterschalter jeweils zum Schalten einer in einem ersten Gleichspannungsbereich liegenden Gleichspannung und die zweiten Halbleiterschalter jeweils zum Schalten einer in einem gegenüber dem ersten Gleichspannungsbereich unterschiedlichen zweiten Gleichspannungsbereich liegenden Gleichspannung ausgelegt. Ferner ist die Steuereinheit dazu ausgebildet, zum Betreiben des Wechselrichters in jedem Funktionsmodus die entsprechende eingangsseitig anliegende Gleichspannung jeweils mittels der Halbleiterschalter derjenigen Halbleiterschaltergruppe in die ausgangsseitig anliegende Wechselspannung umzuwandeln, deren Halbleiterschalter jeweils zum Schalten einer aktuell zu schaltenden Gleichspannung, die von einem aktuellen Gleichspannungswert der umzuwandelnden Gleichspannung abhängig ist, ausgelegt sind. Ferner ist jedem ersten Halbleiterschalter ein mit diesem parallel geschalteter zweiter Halbleiterschalter zugeordnet.

Erfindungsgemäß wird ferner ein Verfahren nach Anspruch 7 zum Betreiben eines Wechselrichters bereitgestellt, der dazu ausgebildet ist, eine eingangsseitig anliegende Gleichspannung in eine ausgangsseitig anliegende Wechselspannung umzuwandeln. Bevorzugt ist die Wechselspannung eine mehrphasige, insbesondere dreiphasige, Wechselspannung. Dabei ist der Wechselrichter eingangsseitig mit einer Batterie verbunden, die eine erste Energiespeicherquelle mit mehreren ersten Energiespeicherzellen und eine in Reihe mit der ersten Energiespeicherquelle geschaltete zweite Energiespeicherquelle mit mehreren gegenüber den ersten Energiespeicherzellen unterschiedlich ausgebildeten zweiten Energiespeicherzellen umfasst. Bei dem Verfahren wird der Wechselrichter durch Steuern von mehreren in diesem angeordneten Halbleiterschaltern in einem ersten Funktionsmodus oder in einem zweiten Funktionsmodus oder in einem dritten Funktionsmodus betrieben. Dabei wandelt der in dem ersten Funktionsmodus betriebene Wechselrichter eine von der ersten Energiespeicherquelle bereitgestellte eingangsseitig anliegende

Gleichspannung in die ausgangsseitig anliegende Wechselspannung um. Ferner wandelt der in dem zweiten Funktionsmodus betriebene Wechselrichter eine von der zweiten Energiespeicherquelle bereitgestellte eingangsseitig anliegende Gleichspannung in die ausgangsseitig anliegende Wechselspannung um. Weiterhin wandelt der in dem dritten Funktionsmodus betriebene Wechselrichter eine von einer Reihenschaltung der ersten Energiespeicherquelle und der zweiten Energiespeicherquelle bereitgestellte eingangsseitig anliegende Gleichspannung in die ausgangsseitig anliegende Wechselspannung um. Die mehreren Halbleiterschalter sind in einer ersten Halbleiterschaltergruppe mit mehreren ersten Halbleiterschaltern und in einer zweiten Halbleiterschaltergruppe mit mehreren zweiten Halbleiterschaltern angeordnet. Dabei sind die ersten Halbleiterschalter jeweils zum Schalten einer in einem ersten Gleichspannungsbereich liegenden Gleichspannung und die zweiten Halbleiterschalter jeweils zum Schalten einer in einem gegenüber dem ersten Gleichspannungsbereich unterschiedlichen zweiten Gleichspannungsbereich liegenden Gleichspannung ausgelegt. Zum Betreiben des Wechselrichters in jedem Funktionsmodus wird die entsprechende an dem Wechselrichter anliegende Gleichspannung mittels der Halbleiterschalter derjenigen Halbleiterschaltergruppe in die ausgangsseitig anliegende Wechselspannung umgewandelt, deren Halbleiterschalter jeweils zum Schalten einer aktuell zu schaltenden Gleichspannung, die von einem aktuellen Gleichspannungswert der umzuwandelnden Gleichspannung abhängig ist, ausgelegt sind. Dabei ist jedem ersten Halbleiterschalter ein mit diesem parallel geschalteter zweiter Halbleiterschalter zugeordnet.

Die Unteransprüche zeigen bevorzugte Weiterbildungen der Erfindung.

Vorzugsweise ist ein Quotient zwischen einem Innenwiderstand jeder ersten Energiespeicherzelle und einer in dieser maximal speicherbaren Energiemenge kleiner als ein Quotient zwischen einem Innenwiderstand jeder zweiten Energiespeicherzelle und einer in dieser maximal speicherbaren Energiemenge.

Im Fokus der vorliegenden Erfindung stehen Spannungsquellen beziehungsweise Energiespeicherquellen, die mehrere jeweils zum Speichern von elektrischer Energie ausgebildete Energiespeicherzellen, wie beispielsweise

Lithium-Ionen-Batteriezellen oder Super- beziehungsweise Ultrakondensatoren, aufweisen und in hybriden Batteriesystemen verwendet werden. Diese Energiespeicherzellen werden dabei so verschaltet, dass eine erste Energiespeicherquelle nur aus ersten Energiespeicherzellen und eine zweite Energiespeicherquelle nur aus gegenüber den ersten Energiespeicherzellen unterschiedlich ausgebildeten zweiten Energiespeicherzellen jeweils ausgebildet sind. Dabei sind die ersten Energiespeicherzellen vorzugsweise Hochleistungszellen und die zweiten Energiespeicherzellen vorzugsweise Hochenergiezellen. Hochleistungs- und Hochenergiezellen unterscheiden sich dadurch, dass ein auf einen Energieinhalt einer Hochleistungszelle bezogener Innenwiderstand unterschiedlich gegenüber einem auf einen Energieinhalt einer Hochleistungszelle bezogenen Innenwiderstand ist.

Bei einer bevorzugten Ausführungsform der Erfindung ist bei einem ausgangsseitig an den Wechselrichter angeschlossenen Elektromotor mittels des Elektromotors ein Drehmoment bereitstellbar, dessen Drehmomentwerte zwischen Null und einem maximalen Drehmomentwert liegen. Dabei ist der Elektromotor mit einer Drehzahl betreibbar, deren Drehzahlwerte zwischen Null und einem maximalen Drehzahlwert liegen. Bevorzugt liegen in dem ersten

Funktionsmodus die von dem Drehmoment annehmbaren Drehmomentwerte in einem sich zwischen einem positiven ersten Drehmomentgrenzwert und dem maximalen Drehmomentwert erstreckenden Drehmomentwertebereich und die von der Drehzahl annehmbaren Drehzahlwerte in einem sich zwischen Null und einem positiven ersten Drehzahlgrenzwert erstreckenden Drehzahlwertebereich.

Bevorzugt liegen in dem zweiten Funktionsmodus die von dem Drehmoment annehmbaren Drehmomentwerte in einem sich zwischen Null und einem positiven zweiten Drehmomentgrenzwert erstreckenden Drehmomentwertebereich und die von der Drehzahl annehmbaren Drehzahlwerte in einem sich zwischen Null und einem positiven zweiten Drehzahlgrenzwert erstreckenden Drehzahlwertebereich.

Vorzugsweise liegen in dem dritten Funktionsmodus die von dem Drehmoment annehmbaren Drehmomentwerte in einem sich zwischen Null und dem maximalen Drehmomentwert erstreckenden Drehmomentwertebereich und die von der Drehzahl annehmbaren Drehzahlwerte in einem sich zwischen einem positiven dritten Drehzahlgrenzwert und dem maximalen Drehzahlwert erstreckenden Drehzahlwertebereich.

Bevorzugt ist der zweite Drehmomentgrenzwert größer als der erste Drehmomentgrenzwert. Bevorzugt ist der zweite Drehzahlgrenzwert größer als der erste Drehzahlgrenzwert. Vorzugsweise ist der dritte Drehzahlgrenzwert kleiner als der zweite Drehzahlgrenzwert und/oder kleiner als der erste Drehzahlgrenzwert.

Anders ausgedrückt wird bei der Erfindung der in einem als Boostbereich bezeichneten Betriebsbereich arbeitende Elektromotor bevorzugt mittels des in dem ersten Funktionsmodus betriebenen erfindungsgemäßen Wechselrichters betrieben. Ferner wird der in einem als Teillastbereich bezeichneten Arbeitsbereich arbeitende Elektromotor bevorzugt mittels des in dem zweiten Funktionsmodus betriebenen erfindungsgemäßen Wechselrichters betrieben. Auch wird der in einem restlichen Arbeitsbereich arbeitende Elektromotor bevorzugt mittels des in dem dritten Funktionsmodus betriebenen erfindungsgemäßen Wechselrichters betrieben.

Bei der Erfindung deckt die erste aus Hochleistungszellen ausgebildete Energiespeicherquelle bevorzugt den Boostbereich ab, das heißt, den unteren Drehzahl- bzw. Lastbereich des Elektromotors. Weiter deckt bei der Erfindung die zweite aus Hochenergiebatteriezelle ausgebildete Energiespeicherquelle bevorzugt den Teillastbereich ab, in dem Elektromotoren von Hybrid- und Elektrofahrzeugen vorrangig betrieben werden. Eine Kombination beider Energiespeicherquellen wird erfindungsgemäß bevorzugt für den restlichen Arbeitsbereich des Elektromotors stufenlos angesteuert. Aus der Auslegung eines solchen hybriden Batteriesystems ergeben sich unterschiedliche Spannungslagen der beiden Energiespeicherquellen, auf deren Basis die Endstufe eines erfindungsgemäß eingesetzten Wechselrichters bevorzugt konfiguriert wird.

Vorzugsweise ist der erfindungsgemäße Wechselrichter ein NPC-Wechselrichter mit drei Spannungsniveaus.

Erfindungsgemäß wird eine Verschaltung der unterschiedlichen Energiespeicherquellen bevorzugt über einen NPC-Wechselrichter mit drei Spannungsniveaus realisiert. Vorteilhaft bei der Verwendung eines solchen NPC-Wechselrichters ist, dass der Wirkungsgrad einer Kombination einer aus den unterschiedlichen Energiespeicherquellen ausgebildeten hybriden Batterie mit einem solchen NPC-Wechselrichter deutlich größer als der Wirkungsgrad einer Kombination derselben hybriden Batterie mit einem üblichen Wechselrichter, dessen Halbleiterschalter in einer B6-Brücke verschaltet sind, ist. Für eine solche hybride Batterie bedeutet dies, dass sich ein nahezu konstanter und hoher Wirkungsgrad über den gesamten Arbeitsbereich eines Elektromotors einstellt, der mittels dieser hybriden Batterie über einen geeigneten NPC-Wechselrichter mit elektrischer Energie versorgt wird. Der Grund dafür ist, dass nur die für eine aktuell von dem Elektromotor angeforderte Spannungslage benötigten Energiespeicherzellen zur Bestromung des Elektromotors herangezogen werden. Auch bewirkt der Ausfall einer Energiespeicherzelle einer Energiespeicherquelle nicht den Ausfall des gesamten Antriebsstrangs des von der hybriden Batterie mit elektrischer Energie versorgten Elektromotors, da ein Spannungspfad der jeweils anderen Energiespeicherquelle voll intakt bleibt. Ebenfalls ist eine Energiespeicherzellen-Symmetrisierung jeweils nur innerhalb einer einzelnen Energiespeicherquelle erforderlich und nicht quellenübergreifend. Kommen verschiedenartige elektrische Energiespeicherquellen zum Einsatz, so wirkt sich dies positiv auf die Lebensdauer der verwendeten Energiespeicherzellen aus, da immer nur die Energiespeicherzellen verwendet werden, die für eine aktuelle Lastanforderung des Elektromotors benötigt werden.

Bezüglich einer spezifisch an die Energiespeicherkomponenten anzupassenden Lastverteilung und einer zum Einsatz kommenden Energiespeichertechnologie ergeben sich mehr Freiheitsgrade hinsichtlich einer Beschaltung der verwendeten Energiespeicherquellen. Weiterhin können auch elektrische Energiespeicherzellen mit unterschiedlicher primärer Spannungslage (Einzelzellen) verbaut werden, ohne dass die Grundfunktionalitäten des hier beschriebenen erfindungsgemäßen Konzeptes nachteilig beeinflusst werden. Damit erhöht sich erfindungsgemäß die Anzahl der Freiheitsgrade möglicher Energiespeichersysteme.

Durch die erfindungsgemäße bevorzugte Verwendung eines NPC-Wechselrichters mit drei Spannungsniveaus ergeben sich gegenüber heutigen, auf dem Markt verfügbaren Systemen, große Vorteile hinsichtlich einer einzusetzenden hybriden Batterie und einer in einem solchen NPC-Wechselrichter vorkommenden Leistungselektronik sowie hinsichtlich eines mittels der hybriden Batterie mit elektrischer Energie zu betreibenden Elektromotors.

Einige markanten Vorteile hinsichtlich der verwendeten Leistungselektronik sind, dass der erfindungsgemäße NPC-Wechselrichter fehlertolerant bei Ausfall eines seiner Halleiterschalter ist und dass eine Verdopplung der mittels eines solchen NPC-Wechselrichters bereitstellbaren Ausgangsspannung bei Verwendung von Halbleiterschaltern, die einer üblichen Halbleitertechnologie angehören, erfolgen kann. Ein erfindungsgemäß eingesetzter NPC-Wechselrichter umfasst bevorzugt zwölf Halbleiterschalter, deren Verschaltung funktional der Verschaltung dieser Halbleiterschalter in zwei in Reihe angeschlossenen B6-Brücken entspricht. Vorteilhaft dabei ist, dass eine Synchronisation der Ansteuerung der zwölf Halbleiterschalter in einer einfachen Weise realisiert werden kann.

Die sich hinsichtlich eines mittels eines erfindungsgemäß eingesetzten NPC-Wechselrichters betriebenen Elektromotors ergebende Vorteile sind, dass der Elektromotor eine bessere Welligkeit aufweist, wodurch eine Reduzierung von Oberwellenverlusten, eine Erhöhung des Wirkungsgrades des Elektromotors und eine Verbesserung der Akustik beim Betreiben des Elektromotors erreicht werden. Vorteilhaft ist es auch, dass ein solcher NPC-Wechselrichter mit erhöhter Schaltfrequenz, die bis zu 40 kHz betragen kann, angesteuert werden kann, wodurch eine Verkleinerung passiver Elemente des Elektromotors, wie beispielsweise von vorkommenden induktiven Elementen und eingesetztem Zwischenkreiskondensator, erreicht werden kann. Gemäß der Erfindung kann der Elektromotor mit Hochspannung versorgt werden, ohne dass eine Entwicklung einer neuen Halbleitertechnologie für den erfindungsgemäß einzusetzenden Wechselrichter erforderlich ist. Gemäß der Erfindung wird ein NPC-Wechselrichter in Kombination mit Spannungsquellen beziehungsweise Energiespeicherquellen verschiedener Typen sehr effizient eingesetzt.

Bei einer besonders bevorzugten Ausführungsform der Erfindung wandeln in dem ersten Funktionsmodus die ersten Halbleiterschalter die an dem Wechselrichter eingangsseitig anliegende und von der ersten Energiespeicherquelle bereitgestellte Gleichspannung in die ausgangsseitig anliegende Wechselspannung um. Dabei wandeln in dem zweiten Funktionsmodus die zweiten Halbleiterschalter die an dem Wechselrichter eingangsseitig anliegende und von der zweiten Energiespeicherquelle bereitgestellte Gleichspannung in die ausgangsseitig anliegende Wechselspannung um. Ferner wandeln in dem dritten Funktionsmodus die ersten Halbleiterschalter und/oder die zweiten Halbleiterschalter die an dem Wechselrichter eingangsseitig anliegende und von der Reihenschaltung der ersten Energiespeicherquelle und der zweiten Energiespeicherquelle bereitgestellte Gleichspannung in die ausgangsseitig anliegende Wechselspannung um.

Das erfindungsgemäße Batteriesystem passt bevorzugt das Verhältnis von Hochleistungs- zu Hochenergiezellen so an, dass die jeweiligen Energiespeicherquellen entsprechend einer jeweils bereitzustellenden C-Rate und der jeweils bereitzustellenden Spannung bezüglich des jeweiligen Arbeitsbereichs eines angeschlossenen Elektromotors eingesetzt werden. Die von den unterschiedlichen Energiespeicherquellen des erfindungsgemäßen Batteriesystems bereitgestellten Gleichspannungen werden dem erfindungsgemäßen Wechselrichter jeweils über einen geeigneten Zwischenkreis als Zwischenkreisspannungen bereitgestellt. Somit ergeben sich unterschiedliche Zwischenkreisspannungen für die beiden Hälften der gesamten Batterie des erfindungsgemäßen Batteriesystems. Bei großen Unterschieden der von den Hochleistungs- und den Hochenergiezellen bereitgestellten Zwischenkreisspannungen können unterschiedlich ausgebildete Halbleiterschalter, das heißt, Halbleiterschalter, die unterschiedlichen Halbleitertechnologien angehören, eingesetzt werden, um die Herstellungskosten und den Wirkungsgrad eines erfindungsgemäßen Batteriesystems zu optimieren. Beispielsweise können als Halbleiterschalter, die unterschiedlichen Halbleitertechnologien angehören, IGBTs, MOSFETs, SiC- und GaN-Transistoren eingesetzt werden. Bevorzugt können auch in dem erfindungsgemäßen Batteriesystem eingesetzte Löschdioden (Clamping-Dioden) und/oder Freilaufdioden unterschiedlich ausgebildet sein, das heißt, unterschiedlichen Halbleitertechnologien angehören. Beispielsweise können als Lösch- und/oder Freilaufdioden, die unterschiedlichen Halbleitertechnologien angehören, jeweils SIC- und GaN-Dioden eingesetzt werden. Auf diese Weise wird erreicht, dass eine Überdimensionierung der in einem erfindungsgemäßen Wechselrichter eingesetzten Leistungselektronik, die bei Einsatz von Halbleiterelementen derselben Halbleitertechnologie für unterschiedliche Zwischenkreisspannungen auftritt, vermieden wird.

Ein weiterer Aspekt der Erfindung betrifft ein Fahrzeug mit einem erfindungsgemäßen Batteriesystem und einem Elektromotor, wobei der Elektromotor ausgangsseitig an den Wechselrichter des Batteriesystems angeschlossen ist und mittels einer von dem Wechselrichter ausgangsseitig bereitgestellten, insbesondere mehrphasigen, Wechselspannung betreibbar ist.

### Kurze Beschreibung der Zeichnungen

Nachfolgend werden Ausführungsbeispiele der Erfindung unter Bezugnahme auf die begleitenden Zeichnungen im Detail beschrieben. Für gleiche Komponenten wurden auch die gleichen Bezugszeichen verwendet. In den Zeichnungen zeigt:

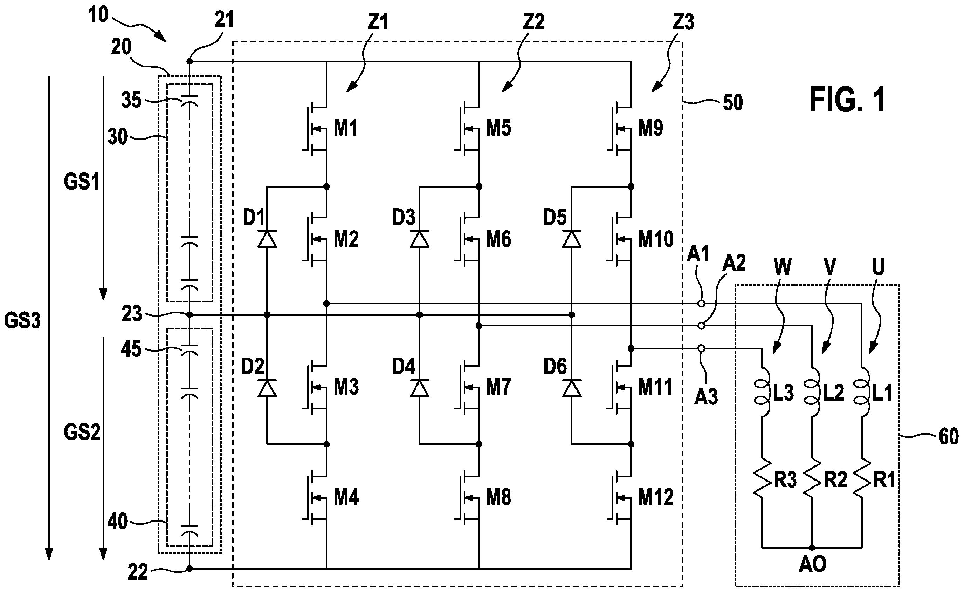

- Figur 1: ein gemäß einer ersten Ausführungsform der Erfindung ausgebildetes Batteriesystem mit angeschlossenem Elektromotor,

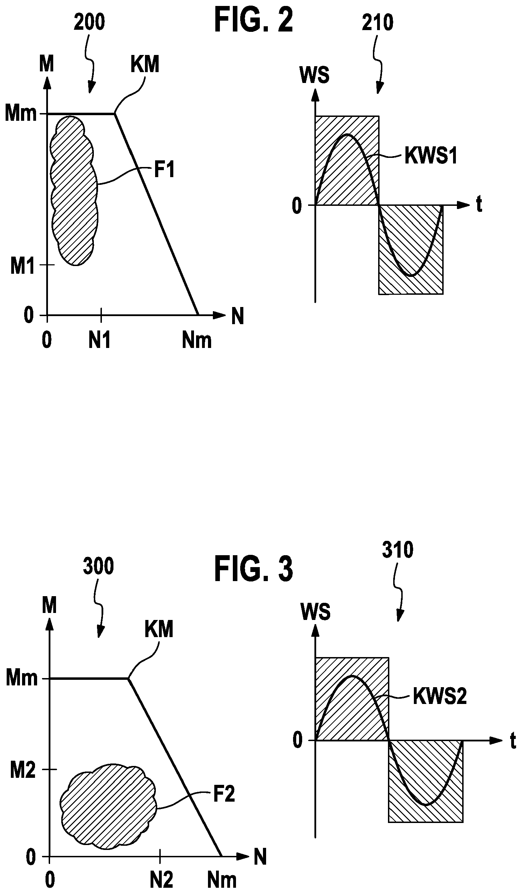

- Figur 2: einen für den in der Figur 1 eingezeichneten und in einem Boostbereich arbeitenden Elektromotor zulässigen Drehmoment-Drehzahl-Änderungsbereich und einen zeitabhängigen Verlauf einer Spannung einer Phase U der denselben im Boostbereich arbeitenden Elektromotor versorgenden dreiphasigen Wechselspannung,
- Figur 3: einen für den in der Figur 1 eingezeichneten und in einem Teillastbereich arbeitenden Elektromotor zulässigen Drehmoment-Drehzahl-Änderungsbereich und einen zeitabhängigen Verlauf einer Spannung einer Phase U der denselben im Teillastbereich arbeitenden Elektromotor versorgenden dreiphasigen Wechselspannung,

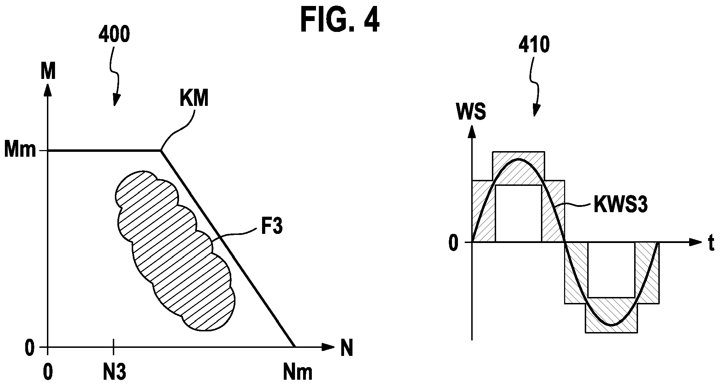

- Figur 4: einen für den in der Figur 1 eingezeichneten und in einem restlichen Arbeitsbereich arbeitenden Elektromotor zulässigen Drehmoment-Drehzahl-Änderungsbereich und einen zeitabhängigen Verlauf einer Spannung einer Phase U der denselben im restlichen Arbeitsbereich arbeitenden Elektromotor versorgenden dreiphasigen Wechselspannung, und,

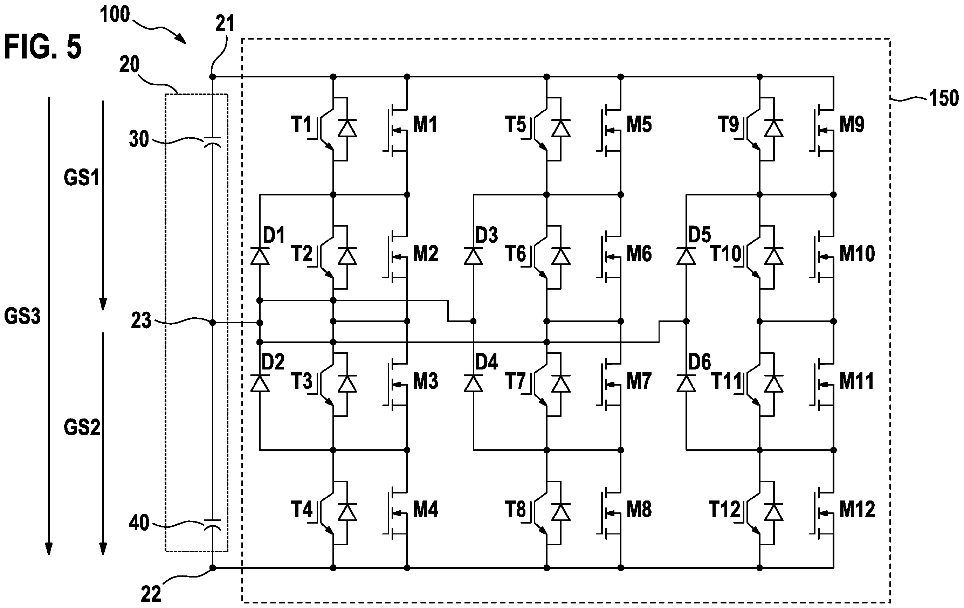

- Figur 5: ein gemäß einer zweiten Ausführungsform der Erfindung ausgebildetes Batteriesystem.

### Ausführungsformen der Erfindung

Figur 1 zeigt ein erfindungsgemäßes Batteriesystem 10 gemäß einer ersten Ausführungsform der Erfindung. Das erfindungsgemäße Batteriesystem 10 weist eine hybride Batterie 20 auf. Die hybride Batterie 20 umfasst eine erste Energiespeicherquelle 30 mit mehreren als Hochleistungszellen ausgebildeten ersten Energiespeicherzellen 35 und eine in Reihe mit der ersten Energiespeicherquelle 30 geschaltete zweite Energiespeicherquelle 40 mit mehreren als Hochenergiezellen ausgebildeten zweiten Energiespeicherzellen 45. Dabei sind die Hochleistungszellen 35 in Reihe miteinander geschaltet. Auch die Hochenergiezellen 45 sind in Reihe miteinander geschaltet. De Hochleistungszellen 35 und die Hochenergiezellen 45 unterscheiden sich untereinander dadurch, dass ein auf den Energieinhalt einer jeweiligen Hochleistungszelle 35 bezogener Innenwiderstand kleiner als ein auf den Energieinhalt bezogener Innenwiderstand einer jeweiligen Hochenergiezelle 45 ist. Zur Vereinfachung der Darstellung wurden nur jeweils eine Hochleistungszelle 35 und nur jeweils eine Hochenergiezelle 45 mit Bezugszeichen versehen.

Ferner stellen die erste Energiespeicherquelle 30 eine Gleichspannung GS1, die zweite Energiespeicherquelle 40 eine Gleichspannung GS2 und die aus der Reihenschaltung der zwei Energiespeicherquellen 30, 40 ausgebildete hybride Batterie 20 eine Gleichspannung GS3 bereit. Die hybride Batterie 20 weist einen positiven Batterieanschluss 21 und einen negativen Batterieanschluss 22 auf. Die erste Energiespeicherquelle 30 ist über einen Mittelabgriff 23 mit der zweiten Energiespeicherquelle 40 verbunden.

Ferner ist in dem Batteriesystem 10 ein NPC-Wechselrichter 50 mit drei Spannungsniveaus angeordnet, der eingangsseitig mit der Batterie 20 und ausgangsseitig mit einem Elektromotor 60 verbunden ist. Der NPC-Wechselrichter 50 umfasst zwölf Halbleiterschalter M1 bis M12, die als zwölf n-Kanal-MOSFETs M1 bis M12 ausgebildet sind und jeweils einen Gate-, einen Source- und einen Drain-Anschluss aufweisen. Die Anschlüsse der n-Kanal-MOSFETs M1,...,M12 wurden zur Vereinfachung der Darstellung nicht mit Bezugszeichen versehen.

Ferner sind die Halbleiterschalter M1,...,M12 in drei an die Batterieanschlüsse 21, 22 angeschlossenen Zweigen Z1 bis Z3 angeordnet. Dabei umfasst ein erster Zweig Z1 vier in Reihe miteinander geschaltete Halbleiterschalter M1 bis M4 und zwei Löschdioden (Clamping-Dioden) D1 und D2, wobei der erste Zweig Z1 über die zwei Löschdioden mit dem Mittelabriff 23 verbunden ist. Ferner umfasst ein zweiter Zweig Z2 andere vier in Reihe miteinander geschaltete Halbleiterschalter M5 bis M8 und zwei andere Löschdioden (Clamping-Dioden) D3 und D4, wobei der zweite Zweig Z2 über die zwei anderen zwei Löschdioden D3, D4 mit dem Mittelabriff 23 verbunden ist. Weiterhin umfasst ein dritter Zweig Z3 weitere vier in Reihe miteinander geschaltete Halbleiterschalter M9 bis M12 und weitere zwei Dioden D5 und D6, wobei der dritte Zweig Z3 über die weiteren zwei Löschdioden D5 und D6 mit dem Mittelabgriff 23 verbunden ist. Die Löschdioden D1 bis D6 umfassen jeweils eine Anode und eine Kathode, die zur Vereinfachung der Darstellung nicht mit Bezugszeichen versehen worden sind.

Gemäß der ersten Ausführungsform der Erfindung ist ein an einem ersten Ende des ersten Zweiges Z1 angeordneter erster n-Kanal-MOSFET M1 des ersten Zweiges Z1 über seinen Drain-Anschluss direkt mit dem positiven Batterieanschluss 21 und über seinen Source-Anschluss mit dem Drain-Anschluss eines benachbart mit dem ersten n-Kanal-MOSFET M1 angeordneten zweiten n-Kanal-MOSFET M2 des ersten Zweiges Z1 verbunden. Ferner ist ein an einem zweiten Ende des ersten Zweiges Z1 angeordneter vierter n-Kanal-MOSFET M4 des ersten Zweiges Z1 über seinen Source-Anschluss mit dem negativen Batterieanschluss 22 und über seinen Drain-Anschluss mit dem Source-Anschluss eines benachbart mit dem vierten n-Kanal-MOSFET M4 angeordneten dritten n-Kanal-MOSFET M3 des ersten Zweiges Z1 direkt verbunden. Auch ist der Source-Anschluss des zweiten n-Kanal-MOSFET M2 des ersten Zweiges Z1 mit dem Drain-Anschluss des dritten n-Kanal-MOSFET M3 des ersten Zweiges Z1 verbunden.

Weiterhin ist eine erste Löschdiode D1 des ersten Zweiges Z1 über ihre Kathode direkt mit dem Drain-Anschluss des zweiten n-Kanal-MOSFETs M2 des ersten Zweiges Z1 und über ihre Anode direkt mit dem Mittelabgriff 23 verbunden. Auch ist eine zweite Löschdiode D2 des ersten Zweiges Z1 über ihre Kathode direkt mit der Anode der ersten Löschdiode D1 des ersten Zweiges Z1 und über ihre Anode direkt mit dem Drain-Anschluss des vierten n-Kanal-MOSFETs M4 des ersten Zweiges Z1 verbunden.

Sowohl ein erster n-Kanal-MOSFET M5, ein zweiter n-Kanal-MOSFET M6, ein dritter n-Kanal-MOSFET M7 und ein vierter n-Kanal-MOSFET M8 des zweiten Zweiges Z2 als auch ein erster n-Kanal-MOSFET M9, ein zweiter n-Kanal-MOSFET M10, ein dritter n-Kanal-MOSFET M11 und ein vierter n-Kanal-MOSFET M12 des dritten Zweiges Z3 sind jeweils in der gleichen Weise wie der entsprechende n-Kanal-MOSFET M1,...,M4 des ersten Zweiges Z1 verschaltet. Sowohl eine erste Löschdiode D3 und eine zweite Löschdiode D4 des zweiten Zweiges Z2 als auch eine erste Löschdiode D5 und eine zweite Löschdiode D6 des dritten Zweiges Z3 sind jeweils in der gleichen Weise wie die entsprechende Löschiode D1, D2 des ersten Zweiges Z1 verschaltet.

Ferner ist jeder Zweig Z1, Z2, Z3 über den Drain-Anschluss seines zweiten n-Kanal-MOSFETs M2, M6, M10 direkt mit einem zugeordneten Anschluss A1, A2, A3 von drei ausgangsseitig angeordneten Anschlüssen A1, A2, A3 des NPC-Wechselrichter 50 verbunden, über die der Wechselrichter 50 dem Elektromotor 60 bei geeigneter Steuerung eine dreiphasige Wechselspannung mit den Phasen U, V, W bereitstellt. Dabei ist dem ersten Zweig Z1 der erste Anschluss A1 zugeordnet, über den der NPC-Wechselrichter 50 die Phase U der dreiphasigen Wechselspannung bereitstellt. Auch ist dem zweiten Zweig Z2 der zweite Anschluss A2 zugeordnet, über den der NPC-Wechselrichter 50 die Phase V der dreiphasigen Wechselspannung bereitstellt. Ferner ist dem dritten Zweig Z3 der dritte Anschluss A3 zugeordnet, über den der NPC-Wechselrichter 50 die Phase W der dreiphasigen Wechselspannung bereitstellt. Der Elektromotor 60 umfasst drei über einen Sternpunkt AO des Elektromotors 60 im Stern geschaltete Reihenschaltungen. Dabei umfasst eine erste Reihenschaltung ein erstes induktiven Element L1 und einen ersten Widerstand R1 und ist zwischen den ersten Anschluss A1 des NPC-Wechselrichters 50 und den Sternpunkt AO geschaltet. Ferner umfasst eine zweite Reihenschaltung ein zweites induktives Element L2 und einen zweiten Widerstand R2 und ist zwischen den zweiten Anschluss A2 des NPC-Wechselrichters 50 und den Sternpunkt AO geschaltet. Auch umfasst eine dritte Reihenschaltung ein drittes induktives Element L3 und einen dritten Widerstand R3 und ist zwischen den dritten Anschluss A3 des NPC-Wechselrichters 50 und den Sternpunkt AO geschaltet. Alle drei induktiven Elemente L1, L2, L3 weisen jeweils den gleichen Induktivitätswert L auf. Ferner weisen alle drei Widerstände R1, R2, R3 jeweils den gleichen Widerstandswert R auf.

Der Elektromotor 60 ist als Drehstrommotor ausgebildet.

Das Batteriesystem 10 umfasst ferner eine Steuereinheit (nicht dargestellt), die dazu ausgebildet ist, durch Steuern der zwölf Halbleiterschalter M1,...,M12 des NPC-Wechselrichters 50 den NPC-Wechselrichter 50 in einem ersten Funktionsmodus oder in einem zweiten Funktionsmodus oder in einem dritten Funktionsmodus zu betreiben. Der in dem ersten Funktionsmodus betriebene NPC-Wechselrichter 50 wandelt die von der ersten Energiespeicherquelle 30 bereitgestellte eingangsseitig anliegende Gleichspannung GS1 in die ausgangsseitig anliegende dreiphasige Wechselspannung um. Der in dem zweiten Funktionsmodus betriebene NPC-Wechselrichter 50 wandelt die von der zweiten Energiespeicherquelle 40 bereitgestellte eingangsseitig anliegende Gleichspannung GS2 in die ausgangsseitig anliegende dreiphasige Wechselspannung um. Der in dem dritten Funktionsmodus betriebene NPC-Wechselrichter 50 wandelt die von einer Reihenschaltung der ersten Energiespeicherquelle 30 und der zweiten Energiespeicherquelle 40 bereitgestellte eingangsseitig anliegende Gleichspannung GS3 in die ausgangsseitig anliegende dreiphasige Wechselspannung um.

Dabei sind dem ersten Funktionsmodus des NPC-Wechselrichters 50 ein erstes Schaltmuster seiner zwölf Halbleiterschalter M1,...,M12 zugeordnet, dem zweiten Funktionsmodus ein zweites Schaltmuster seiner zwölf Halbleiterschalter M1,...,M12 zugeordnet und dem dritten Funktionsmodus ein drittes Schaltmuster seiner zwölf Halbleiteschalter M1,...,M12 zugeordnet.

Gemäß des ersten Schaltmusters werden der erste und der zweite Halbleiterschalter M1, M2, M9, M10 des ersten und des dritten Zweiges Z1, Z3 jeweils zur Erzeugung der ausgangsseitig anliegenden Wechselspannung verwendet, der dritte und der vierte Halbleiterschalter M3, M4, M11, M12 des ersten und des dritten Zweiges Z1, Z3 jeweils geöffnet, der erste und der vierte Halbleiterschalter M5, M8 des zweiten Zweiges Z2 jeweils geöffnet und der zweite und der dritte Halbleiterschalter M6 und M7 des zweiten Zweiges Z2 jeweils zur Erzeugung der ausgangsseitig anliegenden Wechselspannung verwendet.

Gemäß des zweiten Schaltmusters werden der erste und der vierte Halbleiterschalter M1, M4, M9, M12 des ersten und des dritten Zweiges Z1, Z3 jeweils geöffnet, der zweite und der dritte Halbleiterschalter M2, M3, M10, M11 des ersten und des dritten Zweiges Z1, Z3 jeweils zur Erzeugung der ausgangsseitig anliegenden Wechselspannung verwendet, der erste und der zweite Halbleiterschalter M5, M6 des zweiten Zweiges Z2 jeweils geöffnet und der dritte und der vierte Halbleiterschalter M7 und M8 des zweiten Zweiges Z2 jeweils zur Erzeugung der ausgangsseitig anliegenden Wechselspannung verwendet.

Gemäß des dritten Schaltmusters werden der erste und der zweite Halbleiterschalter M1, M2, M9, M10 des ersten und des dritten Zweiges Z1, Z3 jeweils zur Erzeugung der ausgangsseitig anliegenden Wechselspannung verwendet, der dritte und der vierte Halbleiterschalter M3, M4, M11, M12 des ersten und des dritten Zweiges Z1, Z3 jeweils geöffnet, der erste und der zweite Halbleiterschalter M5, M6 des zweiten Zweiges Z2 jeweils geöffnet und der dritte und der vierte Halbleiterschalter M7 und M8 des zweiten Zweiges Z2 jeweils zur Erzeugung der ausgangsseitig anliegenden Wechselspannung verwendet.

Bei der ersten Ausführungsform der Erfindung ist die Steuereinheit dazu ausgebildet, zum Betreiben des NPC-Wechselrichters 50 in jedem Funktionsmodus diejenigen der zwölf Halbleiterschalter M1,..., M12, die bei Vorliegen des dem entsprechenden Funktionsmodus zugeordneten Schaltmusters zur Erzeugung der ausgangsseitig anliegenden Wechselspannung verwendet werden, zu öffnen und zu schließen und diejenige Schalter, die bei Vorliegen dieses Schaltmusters geöffnet sind, zu öffnen oder in einem geöffneten Zustand zu halten.

Ferner ist die Steuereinheit dazu ausgebildet, den NPC-Wechselrichter 50 zum Betreiben des Elektromotors 60 in einem als Boostbereich bezeichneten Arbeitsbereich in dem ersten Funktionsmodus zu betreiben. Zum Beispiel entspricht der Boostbereich einer Anfahrphase des Fahrzeuges, wenn der Elektromotor zum Antreiben des Fahrzeuges eingesetzt wird.

In dem Boostbereich sind Drehmomentwerte eines mittels des Elektromotors 60 bereitzustellenden Drehmomentes M und folglich dem Elektromotor 60 bereitzustellende Ströme groß und Drehzahlwerte einer Drehzahl N, mit der der Elektromotor 60 drehbar ist, und folglich auch dem Elektromotor 60 bereitzustellende Wechselspannungen klein. In diesem Arbeitsbereich werden nur die Hochleistungszellen 35 elektrisch angeschlossen, da von einem im Boostbereich arbeitenden Elektromotor 60 hohe Ströme bei kleinen Spannungen benötigt werden und diese von den Hochenergiezellen 45 aufgrund ihrer C-Raten nicht kurzfristig bereitgestellt werden können.

Ein in der Figur 2 gezeigtes Diagramm 200 zeigt eine Kennlinie KM, die einen Verlauf eines mittels des Elektromotors 60 über einen gesamten Arbeitsbereich maximal bereitstellbaren Drehmomentes M in Abhängigkeit von der Drehzahl N des Elektromotors 60 darstellt. Aus dem Verlauf der Kennlinie KM ist ersichtlich, dass mittels des Elektromotors 60 ein Drehmoment M bereitstellbar ist, dessen Drehmomentwerte zwischen Null und einem maximalen Drehmomentwert Mm liegen, und der Elektromotor 60 mit einer Drehzahl N drehbar ist, deren Drehzahlwerte zwischen Null und einem maximalen Drehzahlwert Nm liegen.

Das Diagramm 200 zeigt ferner einen Flächenabschnitt F1, der einem für den im Boostbereich arbeitenden Elektromotor 60 zulässigen Drehmoment-Drehzahl-Änderungsbereich entspricht. Aus der Form und Positionierung des Flächenabschnittes F1 ist ersichtlich, dass von dem im Boostbereich arbeitenden Elektromotor 60 ein Drehmoment M bereitstellbar ist, das Drehmomentwerte annehmen kann, die in einem sich zwischen einem positiven ersten Drehmomentgrenzwert M1 und dem maximalen Drehmomentwert Mm erstreckenden Drehmomentwertebereich liegen. Auch ist aus der Form und Positionierung des Flächenabschnittes F1 ersichtlich, dass der im Boostbereich arbeitenden Elektromotor 60 mit einer Drehzahl N betreibbar ist, deren Drehzahlwerte in einem sich zwischen Null und einem positiven ersten Drehzahlgrenzwert N1 erstreckenden Drehzahlwertebereich liegen.

Ein in der Figur 2 eingezeichnetes Diagramm 210 zeigt einen in Abhängigkeit von einer Zeit t dargestellten Verlauf KWS1 einer Spannung WS der Phase U der dreiphasigen Wechselspannung, die dem im Boostbereich arbeitenden Elektromotor 60 von dem NPC-Wechselrichters 50 bereitgestellt wird.

Weiterhin ist die Steuereinheit dazu ausgebildet den NPC-Wechselrichter 60 zum Betreiben des Elektromotors 60 in einem als Teillastbereich bezeichneten Arbeitsbereich in dem zweiten Funktionsmodus zu betreiben.

In dem Teillastbereich sind die Drehmomentwerte des mittels des Elektromotors 60 bereitzustellenden Drehmomentes M und folglich die dem Elektromotor 60 bereitzustellenden Ströme klein bis mittelgroß und die Drehzahlwerte der Drehzahl N, mit der der Elektromotor 60 betreibbar ist, und folglich auch die dem Elektromotor 60 bereitzustellenden Wechselspannungen klein bis mittelgroß. In diesem Arbeitsbereich werden nur die Hochenergiezellen 45 elektrisch angeschlossen, da die Hochenergiezellen 45 aufgrund ihrer hohen Kapazität den Anforderungen an die dem im Teillastbereich arbeitenden Elektromotor 60 bereitzustellenden Strömen und Spannungen über längere Zeit besser gerecht werden.

Ein in der Figur 3 eingezeichnetes Diagramm 300 zeigt die in dem Diagramm 200 schon eingezeichnete Kennlinie KM. Das Diagramm 300 zeigt ferner einen Flächenabschnitt F2, der einem für den im Teillastbereich arbeitenden Elektromotor 60 zulässigen Drehmoment-Drehzahl-Änderungsbereich entspricht. Aus der Form und Positionierung des Flächenabschnittes F2 ist ersichtlich, dass von dem im Teillastbereich arbeitenden Elektromotor 60 ein Drehmoment M bereitstellbar ist, das Drehmomentwerte annehmen kann, die in einem sich zwischen Null und einem gegenüber dem ersten Drehmomentgrenzwert M1 größeren positiven zweiten Drehmomentgrenzwert M2 erstreckenden Drehmomentwertebereich liegen. Auch ist aus der Form und Positionierung des Flächenabschnittes F2 ersichtlich, dass der im Teillastbereich arbeitende Elektromotor 60 mit einer Drehzahl N betreibbar ist, deren Drehzahlwerte in einem sich zwischen Null und einem gegenüber dem ersten Drehzahlgrenzwert größeren positiven zweiten Drehzahlgrenzwert N2 erstreckenden Drehzahlwertebereich liegen.

Ein in der Figur 3 eingezeichnetes Diagramm 310 zeigt einen in Abhängigkeit von der Zeit t dargestellte Verlauf KWS2 der Spannung WS der Phase U der dreiphasige Wechselspannung, die dem im Teillastbereich arbeitenden Elektromotors 60 von dem NPC-Wechselrichter 50 bereitgestellt wird.

Ferner ist die Steuereinheit dazu ausgebildet den NPC-Wechselrichter 60 zum Betreiben des Elektromotors 60 in dem restlichen Arbeitsbereich, der insbesondere einen Feldschwächbereich umfasst, in dem dritten Funktionsmodus zu betreiben.

In dem restlichen Arbeitsbereich sind die Drehmomentwerte des mittels des Elektromotors 60 bereitzustellenden Drehmomentes M und folglich die dem Elektromotor 60 bereitzustellenden Ströme klein bis groß und die Drehzahlwerte der Drehzahl N, mit der der Elektromotor 60 betreibbar ist, und folglich auch die dem Elektromotor 60 bereitzustellenden Wechselspannungen mittelgroß bis groß. In diesem Arbeitsbereich wird die Reihenschaltung der Hochleistungszellen 35 und der Hochenergiezellen 45 elektrisch angeschlossen, da diese Reihenschaltung den Anforderungen an die dem im restlichen Arbeitsbereich arbeitenden Elektromotor 60 bereitzustellenden Strömen und Spannungen besser gerecht wird.

Ein in der Figur 4 eingezeichnetes Diagramm 400 zeigt die in dem Diagramm 200 schon eingezeichnete Kennlinie KM. Das Diagramm 400 zeigt ferner einen Flächenabschnitt F3, der einem für den im restlichen Arbeitsbereich arbeitenden Elektromotor 60 zulässigen Drehmoment-Drehzahl-Änderungsbereich entspricht. Aus der Form und Positionierung des Flächenabschnittes F3 ist ersichtlich, dass von dem im restlichen Arbeitsbereich arbeitenden Elektromotor 60 ein Drehmoment M bereitstellbar ist, das Drehmomentwerte annehmen kann, die in einem sich zwischen Null und dem maximalen Drehmomentwert Mm erstreckenden Drehmomentwertebereich liegen. Auch ist aus der Form und Positionierung des Flächenabschnittes F3 ersichtlich, dass der im Teillastbereich arbeitende Elektromotor 60 mit einer Drehzahl N betreibbar ist, deren Drehzahlwerte in einem sich zwischen einem gegenüber dem ersten Drehzahlgrenzwert N1 kleineren positiven Drehzahlgrenzwert N3 und dem maximalen Drehzahlwert Nm erstreckenden Drehzahlwertebereich liegen.

Ein in der Figur 4 eingezeichnetes Diagramm 410 zeigt einen in Abhängigkeit von der Zeit t dargestellten Verlauf KWS3 der Spannung WS der Phase U der dreiphasige Wechselspannung, die dem im restlichen Arbeitsbereich arbeitenden Elektromotor 60 von dem NPC-Wechselrichters 50 bereitgestellt wird.

Figur 5 zeigt ein Batteriesystem 100 gemäß einer zweiten Ausführungsform der Erfindung. Das Batteriesystem 100 umfasst auch hier eine hybride Batterie 20, die eine aus Hochleistungszellen ausgebildete erste Energiespeicherquelle 30 und eine aus Hochenergiezellen ausgebildete zweite Energiespeicherquelle 40 umfasst. Zur Vereinfachung der Darstellung aus der Figur 5 wurden nur die zwei Energiespeicherquellen 30 und 40 dargestellt, ohne dass dabei diese jeweils ausbildenden Hochleistungs- beziehungsweise Hochenergiezellen einzeln dargestellt sind.

Das Batteriesystem 100 gemäß der zweiten Ausführungsform der Erfindung unterscheidet sich von dem Batteriesystem 10 gemäß der ersten Ausführungsform der Erfindung dadurch, dass Halbleiterschalter eines in dem Batteriesystem 100 angeordnete NPC-Wechselrichters 150 in einer ersten Halbleiterschaltergruppe von zwölf ausgebildeten ersten Halbleiterschaltern T1 bis T12, die als zwölf IGBTs T12 bis T12 ausgebildet sind, und in einer zweiten Halbleiterschaltergruppe von zwölf zweiten Halbleiterschaltern M1 bis M12, die als zwölf n-Kanal-MOSFETs M1 bis M12 ausgebildet sind, angeordnet sind. Dabei sind die ersten Halbleiterschalter T1,...,T12jeweils zum Schalten einer in einem ersten Gleichspannungsbereich liegenden Gleichspannung und die zweiten Halbleiterschalter M1,...,M12 jeweils zum Schalten einer in einem gegenüber dem ersten Gleichspannungsbereich unterschiedlichen zweiten Gleichspannungsbereich liegenden Gleichspannung ausgelegt. Die zweiten Halbleiterschalter M1,...,M12 weisen dieselbe Schaltanordnung wie die zwölf Halbleiterschalter des NPC-Wechselrichters des gemäß der ersten Ausführungsform der Erfindung ausgebildeten Batteriesystems auf. Bei der zweiten Ausführungsform der Erfindung gehören Halbleiterschalter unterschiedlicher Halbleitergruppen unterschiedlichen Halbleitertechnologien an.

Gemäß der zweiten Ausführungsform der Erfindung ist jedem n-Kanal-MOSFET M1,...,M12 jeweils ein IGBT T1,...,T12 zugeordnet. Dabei ist jeder IGBT T1,...,T12 parallel zu dem ihm zugeordneten n-Kanal-MOSFET M1,...,M12 geschaltet. Dazu umfasst jeder IGBT T1,...,T12 einen Emitter-Anschluss und einen Kollektor-Anschluss, wobei jeder IGBT T1,...,T12 über seinen Emitter-Anschluss mit einem Source-Anschluss und über seinen Kollektor-Anschluss mit einem Drain-Anschluss des zugeordneten n-Kanal-MOSFET M1,...,M12 direkt verbunden ist. Auch ist der Emitter-Anschluss jedes IGBTs T1,...,T12 mit einer Anode einer diesem zugeordneten Freilaufdiode und der Kollektor-Anschluss jedes IGBTs T1,...,T12 mit einer Kathode der diesem zugeordneten Freilaufdiode direkt verbunden. Zur Vereinfachung der Darstellung aus der Figur 5 wurden die den zwölf IGBTs T1,...,T12 zugeordneten Freilaufdioden nicht mit Bezugszeichen versehen.

Auch bei der zweiten Ausführungsform der Erfindung ist auch ausgangsseitig an dem NPC-Wechselrichter 150 ein Elektromotor (nicht dargestellt) angeschlossen, der mittels einer ausgangsseitig an dem NPC-Wechselrichter 150 anliegenden dreiphasigen Wechselspannung betrieben wird.

Das Batteriesystem 100 umfasst auch hier eine Steuereinheit (nicht dargestellt), die dazu ausgebildet ist, durch Steuern der Halbleiterschalter T1,...,T12, M1,...,M12 des NPC-Wechselrichters 150 den NPC-Wechselrichter 150 auch bei der zweiten Ausführungsform der Erfindung in dem ersten Funktionsmodus oder in dem zweiten Funktionsmodus oder in dem dritten Funktionsmodus zu betreiben. Dabei wird der NPC-Wechselrichter 150 auch hier zum Betreiben des Elektromotors in einem Boostbereich in dem ersten Funktionsmodus, zum Betreiben des Elektromotors in einem Teillastbereich in dem zweiten Funktionsmodus und zum Betreiben des Elektromotors in einem restlichen Arbeitsbereich in dem dritten Funktionsmodus betrieben.

Dabei ist die Steuereinheit dazu ausgebildet ist, zum Betreiben des Wechselrichters 150 in jedem Funktionsmodus die entsprechende eingangsseitig anliegende Gleichspannung GS1, GS2, GS3 jeweils mittels der Halbleiterschalter derjenigen Halbleiterschaltergruppe, deren Halbleiterschalter jeweils zum Schalten einer aktuell zu schaltenden Gleichspannung ausgelegt sind, in die ausgangsseitig anliegende Wechselspannung umzuwandeln. Dabei ist in jedem Funktionsmodus die von jedem Halbleiterschalter T1,...,T12, M1,...,M12 zu schaltenden Gleichspannung von einem aktuellen Gleichspannungswert der in dem entsprechenden Funktionsmodus umzuwandelnden Gleichspannung GS1, GS2, GS3 abhängig.

Bei der zweiten Ausführungsform der Erfindung wandeln bevorzugt die jeweils als ein IGBT ausgebildeten ersten Halbleiterschalter T1,...,T12 die an dem NPC-Wechselrichter 150 eingangsseitig anliegende und von der aus den Hochleistungszellen ausgebildeten ersten Energiespeicherquelle 30 bereitgestellte Gleichspannung GS1 in die ausgangsseitig anliegende Wechselspannung um. Auch wandeln in dem zweiten Funktionsmodus bevorzugt die jeweils als n-Kanal-MOSFET ausgebildeten zweiten Halbleiterschalter M1,...,M12 die an dem NPC-Wechselrichter 150 eingangsseitig anliegende und von der aus den Hochenergiezellen ausgebildeten zweiten Energiespeicherquelle 40 bereitgestellte Gleichspannung GS2 in die ausgangsseitig anliegende Wechselspannung um. Ferner wandeln in dem dritten Funktionsmodus bevorzugt die ersten Halbleiterschalter T1 bis T12 und/oder die zweiten Halbleiterschalter M1,...,M12 die von der Reihenschaltung der ersten Energiespeicherquelle 30 und der zweiten Energiespeicherquelle 40 bereitgestellte Gleichspannung GS3 in die ausgangsseitig anliegende Wechselspannung um.

Bei der Erfindung werden die an dem NPC-Wechselrichter 150 eingangsseitig anliegenden Gleichspannungen GS1, GS2, GS3 jeweils über einen geeigneten Zwischenkreis als eine entsprechende Zwischenkreisspannung bereitgestellt. Dabei können die an dem NPC-Wechselrichter 150 eingangsseitig anliegenden Gleichspannungen GS1, und GS2 sehr unterschiedlich sein. Gemäß der zweiten Ausführungsform der Erfindung werden zum Umwandeln unterschiedlicher Zwischenkreisspannungen Halbleiterschalter unterschiedlicher Halbleitergruppen, das heißt, Halbleiterschalter, die jeweils unterschiedlicher Halbleitertechnologien angehören, verwendet, wobei keine Beschränkungen auf n-Kanal-MOSFETs und IGBTs bestehen, sondern die entsprechenden Halbleiterschalter M1,...,M12 und T1,...,T12 entsprechend ihrer Eigenschaften, den Eigenschaften der hybriden Batterie 20 und den Eigenschaften des angeschlossenen Verbrauchers, hier des Elektromotors 60, ausgewählt werden können.

Neben der voranstehenden schriftlichen Offenbarung wird hiermit zur weiteren Offenbarung der Erfindung ergänzend auf die Darstellung in den Figuren 1 bis 5 Bezug genommen.

## Patentansprüche

1. Batteriesystem (10; 100) aufweisend eine hybride Batterie (20), die eine erste Energiespeicherquelle (30) mit ersten Energiespeicherzellen (35) und eine in Reihe mit der ersten Energiespeicherquelle (30) geschaltete zweite Energiespeicherquelle (40) mit mehreren gegenüber den ersten Energiezellen (35) unterschiedlich ausgebildeten zweiten Energiespeicherzellen (45) umfasst, und einen Wechselrichter (50; 150), der eingangsseitig mit der Batterie (20) verbunden und dazu ausgebildet ist, eine eingangsseitig anliegende Gleichspannung (GS1, GS2, GS3) in eine ausgangsseitig anliegende, insbesondere mehrphasige, Wechselspannung umzuwandeln, wobei das Batteriesystem (10; 100) eine Steuereinheit umfasst, die dazu ausgebildet ist, durch Steuern von mehreren Halbleiterschaltern (M1,...,M12; T1,...,T12, M1,...,M12) des Wechselrichters (50; 150) den Wechselrichter (50; 150) in einem ersten Funktionsmodus zu betreiben, in dem dieser eine von der ersten Energiespeicherquelle (30) bereitgestellte eingangsseitig anliegende Gleichspannung (GS1) in die ausgangsseitig anliegende Wechselspannung umwandelt, oder den Wechselrichter (50; 150) in einem zweiten Funktionsmodus zu betreiben, in dem dieser eine von der zweiten Energiespeicherquelle (40) bereitgestellte eingangsseitig anliegende Gleichspannung (GS2) in die ausgangsseitig anliegende Wechselspannung umwandelt, oder den Wechselrichter (50; 150) in einem dritten Funktionsmodus zu betreiben, in dem dieser eine von einer Reihenschaltung der ersten Energiespeicherquelle (30) und der zweiten Energiespeicherquelle (40) bereitgestellte eingangsseitig anliegende Gleichspannung (GS3) in die ausgangsseitig anliegende Wechselspannung umwandelt, wobei die mehreren Halbleiterschalter (T1,...,T12, M1,...,M12) in einer ersten Halbleiterschaltergruppe mit mehreren ersten Halbleiterschaltern (T1,...,T12), die jeweils zum Schalten einer in einem ersten Gleichspannungsbereich liegenden Gleichspannung ausgelegt sind, und in einer zweiten Halbleiterschaltergruppe mit mehreren zweiten Halbleiterschaltern (M1,...,M12), die jeweils zum Schalten einer in einem gegenüber dem ersten Gleichspannungsbereich unterschiedlichen zweiten Gleichspannungsbereich liegenden Gleichspannung ausgelegt sind, angeordnet sind, wobei die Steuereinheit dazu ausgebildet ist, zum Betreiben des Wechselrichters (150) in jedem Funktionsmodus die entsprechende ausgangsseitig anliegende Gleichspannung (GS1, GS2, GS3) jeweils mittels der Halbleiterschalter derjenigen Halbleiterschaltergruppe in die ausgangsseitig anliegende Wechselspannung umzuwandeln, deren Halbleiterschalter jeweils zum Schalten einer aktuell zu schaltenden Gleichspannung, die von einem aktuellen Gleichspannungswert der umzuwandelnden Gleichspannung (GS1, GS2, GS3) abhängig ist, ausgelegt sind, **dadurch gekennzeichnet, dass** jedem ersten Halbleiterschalter (T1,...,T12) ein mit diesem parallel geschalteter zweiter Halbleiterschalter (M1,...,M12) zugeordnet ist.

2. Batteriesystem (10; 100) nach Anspruch 1, wobei ein Quotient zwischen einem Innenwiderstand jeder ersten Energiespeicherzelle (35) und einer in dieser maximal speicherbaren Energiemenge kleiner als ein Quotient zwischen einem Innenwiderstand jeder zweiten Energiespeicherzelle (45) und einer in dieser maximal speicherbaren Energiemenge ist.

3. Batteriesystem (10; 100) nach einem der Ansprüche 1 oder 2, wobei der Wechselrichter (50; 150) ein NPC-Wechselrichter mit drei Spannungsniveaus ist.

4. Batteriesystem (10; 100) nach einem der vorangehenden Ansprüche, wobei bei einem ausgangsseitig an den Wechselrichter (50; 150) angeschlossenen Elektromotor (60) mittels des Elektromotors (60) ein Drehmoment (M) bereitstellbar ist, dessen Drehmomentwerte zwischen Null und einem maximalen Drehmomentwert (Mm) liegen, und der Elektromotor (60) mit einer Drehzahl (N) betreibbar ist, deren Drehzahlwerte zwischen Null und einem maximalen Drehzahlwert (Nm) liegen, wobei in dem ersten Funktionsmodus die von dem Drehmoment (M) annehmbaren Drehmomentwerte in einem sich zwischen einem positiven ersten Drehmomentgrenzwert (M1) und dem maximalen Drehmomentwert (Mm) erstreckenden Drehmomentwertebereich liegen, und die von der Drehzahl (N) annehmbaren Drehzahlwerte in einem sich zwischen Null und einem positiven ersten Drehzahlgrenzwert (N1) erstreckenden Drehzahlwertebereich liegen, und/oder in dem zweiten Funktionsmodus die von dem Drehmoment (M) annehmbaren Drehmomentwerte in einem sich zwischen Null und einem positiven zweiten Drehmomentgrenzwert (M2) erstreckenden Drehmomentwertebereich liegen und die von der Drehzahl (N) annehmbaren Drehzahlwerte in einem sich zwischen Null und einem positiven zweiten Drehzahlgrenzwert (N2) erstreckenden Drehzahlwertebereich liegen und/oder einem dritten Funktionsmodus die von dem Drehmoment (M) annehmbaren Drehmomentwerte in einem sich zwischen Null und dem maximalen Drehmomentwert (Mm) erstreckenden Drehmomentwertebereich liegen und die von der Drehzahl (N) annehmbaren Drehzahlwerte in einem sich zwischen einem positiven dritten Drehzahlgrenzwert (N3) und dem maximalen Drehzahlwert (Nm) erstreckenden Drehzahlwertebereich liegen.

5. Batteriesystem (10; 100) nach Anspruch 4, wobei der zweite Drehmomentgrenzwert (M2) größer als der erste Drehmomentgrenzwert (M1) ist und/oder der zweite Drehzahlgrenzwert (N2) größer als der erste Drehzahlgrenzwert (N1) ist und/oder der dritte Drehzahlgrenzwert (N3) kleiner als der zweite Drehzahlgrenzwert (N2) und/oder kleiner als der erste Drehzahlgrenzwert (N1) ist.

6. Batteriesystem (100) nacheinem der Ansprüche 1 bis 5, wobei in dem ersten Funktionsmodus die ersten Halbleiterschalter (T1,...,T12) die an dem Wechselrichter (150) eingangsseitig anliegende und von der ersten Energiespeicherquelle (30) bereitgestellte Gleichspannung (GS1) in die ausgangsseitig anliegende Wechselspannung umwandeln, in dem zweiten Funktionsmodus die zweiten Halbleiterschalter (M1,...,M12) die an dem Wechselrichter (150) eingangsseitig anliegende und von der zweiten Energiespeicherquelle (40) bereitgestellte Gleichspannung (GS2) in die ausgangsseitig anliegende Wechselspannung umwandeln und in dem dritten Funktionsmodus die ersten Halbleiterschalter (T1,...,T12) und/oder die zweiten Halbleiterschalter (M1,...,M12) die an dem Wechselrichter (150) eingangsseitig anliegende und von der Reihenschaltung der ersten Energiespeicherquelle (30) und der zweiten Energiespeicherquelle (30) bereitgestellte Gleichspannung (GS3) in die ausgangsseitig anliegende Wechselspannung umwandeln.

7. Verfahren zum Betreiben eines Wechselrichters (50; 150), der dazu ausgebildet ist, eine eingangsseitig anliegende Gleichspannung (GS1, GS2, GS3) in eine ausgangsseitig anliegende, insbesondere mehrphasige, Wechselspannung umzuwandeln, wobei der Wechselrichter (50; 150) eingangsseitig mit einer hybriden Batterie (20) verbunden ist, die eine erste Energiespeicherquelle (30) mit mehreren ersten Energiespeicherzellen (35) und eine in Reihe mit der ersten Energiespeicherquelle (30) geschaltete zweite Energiespeicherquelle (40) mit mehreren gegenüber den ersten Energiespeicherzellen (35) ausgebildeten zweiten Energiespeicherzellen (45), umfasst, wobei durch Steuern von mehreren Halbleiterschaltern (M1,...,M12; T1,...,T12, M1,...,M12) des Wechselrichters (50; 150) der Wechselrichter (50; 150) in einem ersten Funktionsmodus betrieben wird, in dem dieser eine von der ersten Energiespeicherquelle (30) bereitgestellte eingangsseitig anliegende Gleichspannung (GS1) in die ausgangsseitig anliegende Wechselspannung umwandelt, oder der Wechselrichter (50; 150) in einem zweiten Funktionsmodus betrieben wird, in dem dieser eine von der zweiten Energiespeicherquelle (40) bereitgestellte eingangsseitig anliegende Gleichspannung (GS2) in die ausgangsseitig anliegende Wechselspannung umwandelt, oder der Wechselrichter (50; 150) in einem dritten Funktionsmodus betrieben wird, in dem dieser eine von einer Reihenschaltung der ersten Energiespeicherquelle (30) und der zweiten Energiespeicherquelle (40) bereitgestellte eingangsseitig anliegende Gleichspannung (GS3) in die ausgangsseitig anliegende Wechselspannung umwandelt, wobei die mehreren Halbleiterschalter (T1,...,T12, M1,...,M12) in einer ersten Halbleiterschaltergruppe mit mehreren ersten Halbleiterschaltern (T1,...,T12), die jeweils zum Schalten einer in einem ersten Gleichspannungsbereich liegenden Gleichspannung ausgelegt sind, und in einer zweite Halbleiterschaltergruppe mit mehreren zweiten Halbleiterschaltern (M1,...,M12), die jeweils zum Schalten einer in einem gegenüber dem ersten Gleichspannungsbereich unterschiedlichen zweiten Gleichspannungsbereich liegenden Gleichspannung ausgelegt sind, angeordnet sind, wobei zum Betreiben des Wechselrichters (150) in jedem Funktionsmodus die entsprechende an dem Wechselrichter (150) anliegende Gleichspannung (GS1, GS2, GS3) mittels der Halbleiterschalter derjenigen Halbleiterschaltergruppe in die ausgangsseitig anliegende Wechselspannung umgewandelt wird, deren Halbleiterschalter jeweils zum Schalten einer aktuell zu schaltenden Gleichspannung, die von einem aktuellen Gleichspannungswert der umzuwandelnden Gleichspannung (GS1, GS2, GS3) abhängig ist, ausgelegt sind, **dadurch gekennzeichnet, dass** jedem ersten Halbleiterschalter (T1,...,T12) ein mit diesem parallel geschalteter zweiter Halbleiterschalter (M1,...,M12) zugeordnet ist.

8. Verfahren nach Anspruch 7, wobei ein Quotient zwischen einem Innenwiderstand jeder ersten Energiespeicherzelle (35) und einer in dieser maximal speicherbaren Energiemenge kleiner als ein Quotient zwischen einem Innenwiderstand jeder zweiten Energiespeicherzelle (45) und einer in dieser maximal speicherbaren Energiemenge ist.

9. Verfahren nach einem der Ansprüche 7 oder 8, wobei ausgangsseitig an den Wechselrichter (10; 100) ein Elektromotor (60) angeschlossen wird, mittels dem ein Drehmoment (M) bereitstellbar ist, dessen Drehmomentwerte zwischen Null und einem maximalen Drehmomentwert (Mm) liegen, und der mit eine Drehzahl (N) betreibbar ist, deren Drehzahlwerte zwischen Null und einem maximalen Drehzahlwert (Nm) liegen, wobei in dem ersten Funktionsmodus die von dem Drehmoment (M) annehmbaren Drehmomentwerte in einem sich zwischen einem positiven ersten Drehmomentgrenzwert (M1) und dem maximalen Drehmomentwert (Mm) erstreckenden Drehmomentwertebereich liegen, und die von der Drehzahl (N) annehmbaren Drehzahlwerte in einem sich zwischen Null und einem positiven ersten Drehzahlgrenzwert (N1) erstreckenden Drehzahlwertebereich liegen und/oder in dem zweiten Funktionsmodus die von dem Drehmoment (M) annehmbaren Drehmomentwerte in einem sich zwischen Null und einem positiven zweiten Drehmomentgrenzwert (M2) erstreckenden Drehmomentwertebereich liegen und die von der Drehzahl (N) annehmbaren Drehzahlwerte in einem sich zwischen Null und einem positiven zweiten Drehzahlgrenzwert (N2) erstreckenden Drehzahlwertebereich liegen und/oder in dem dritten Funktionsmodus die von dem Drehmoment (M) annehmbaren Drehmomentwerte in einem sich zwischen Null und dem maximalen Drehmomentwert (Mm) erstreckenden Drehmomentwertebereich liegen und die von der Drehzahl (N) annehmbaren Drehzahlwerte in einem sich zwischen einem positiven dritten Drehzahlgrenzwert (N3) und dem maximalen Drehzahlwert (Nm) sich erstreckenden Drehzahlwertebereich liegen.

10. Verfahren nach Anspruch 9, wobei der zweite Drehmomentgrenzwert (M2) größer als der erste Drehmomentgrenzwert (M1) ist und/oder der zweite Drehzahlgrenzwert (N2) größer als der erste Drehzahlgrenzwert (N1) ist und/oder der dritte Drehzahlgrenzwert (N3) kleiner als der zweite Drehzahlgrenzwert (N2) und/oder kleiner als der erste Drehzahlgrenzwert (N1) ist.

11. Verfahren nach einem der Ansprüche 7 bis 10 , wobei in dem ersten Funktionsmodus die an dem Wechselrichter (150) eingangsseitig anliegende und von der ersten Energiespeicherquelle (30) bereitgestellte Gleichspannung (GS1) mittels der ersten Halbleiterschalter (T1,...,T12) in die ausgangsseitig anliegende Wechselspannung umgewandelt wird, in dem zweiten Funktionsmodus die an dem Wechselrichter (150) eingangsseitig anliegende und von der zweiten Energiespeicherquelle (40) bereitgestellte Gleichspannung (GS2) mittels der zweiten Halbleiterschalter (M1,...,M12) in die ausgangsseitig anliegende Wechselspannung umgewandelt wird und in dem dritten Funktionsmodus die an dem Wechselrichter (150) eingangsseitig anliegende und von der Reihenschaltung der ersten Energiespeicherquelle (30) und der zweiten Energiespeicherquelle (40) bereitgestellte Gleichspannung (GS3) mittels der ersten Halbleiterschalter (T1,...,T12) und/oder der zweiten Halbleiterschalter (M1,...,M12) in die ausgangsseitig anliegende Wechselspannung umgewandelt wird.

12. Fahrzeug mit einem Batteriesystem (10; 100) nach einem der Ansprüche 1 bis 6 und mit einem Elektromotor (60), wobei der Elektromotor (60) ausgangsseitig an den Wechselrichter (50; 150) des Batteriesystems (10; 100) angeschlossen ist und mittels einer von dem Wechselrichter (50; 150) ausgangsseitig bereitgestellten, insbesondere mehrphasigen, Wechselspannung betreibbar ist.

## Claims

1. Battery system (10; 100) having a hybrid battery (20), which comprises a first energy storage source (30) having first energy storage cells (35) and a second energy storage source (40) which is connected in series with the first energy storage source (30) and has a plurality of second energy storage cells (45) which are different from the first energy cells (35), and an inverter (50; 150) which is connected at the input end to the battery (20) and is designed to convert a DC voltage (GS1, GS2, GS3) applied to the input end into an AC voltage, in particular a polyphase AC voltage, applied to the output end, wherein the battery system (10; 100) comprises a control unit which is designed to operate the inverter (50; 150) in a first functional mode, in which it converts a DC voltage (GS1) applied to the input end and provided by the first energy storage source (30) into the AC voltage applied to the output end, or to operate the inverter (50; 150) in a second functional mode, in which it converts a DC voltage (GS2) applied to the input end and provided by the second energy storage source (40) into the AC voltage applied to the output end, or to operate the inverter (50; 150) in a third functional mode, in which it converts a DC voltage (GS3) applied to the input end and provided by a series circuit of the first energy storage source (30) and the second energy storage source (40) into the AC voltage applied to the output end, by controlling a plurality of semiconductor switches (M1,...,M12; T1,...,T12, M1,...,M12) of the inverter (50; 150), wherein the plurality of semiconductor switches (T1,...,T12, M1,...,M12) are arranged in a first group of semiconductor switches having a plurality of first semiconductor switches (T1,...,T12) each designed to switch a DC voltage in a first DC voltage range and in a second group of semiconductor switches having a plurality of second semiconductor switches (M1,...,M12) each designed to switch a DC voltage in a second DC voltage range different from the first DC voltage range, wherein, in order to operate the inverter (150) in each functional mode, the control unit is designed to respectively convert the corresponding DC voltage (GS1, GS2, GS3) applied to the input end into the AC voltage applied to the output end by means of the semiconductor switches in that group of semiconductor switches whose semiconductor switches are each designed to switch a DC voltage which is currently to be switched and is dependent on a current DC voltage value of the DC voltage (GS1, GS2, GS3) to be converted, **characterized in that** each first semiconductor switch (T1,...,T12) is assigned a second semiconductor switch (M1,...,M12) connected in parallel with it.

2. Battery system (10; 100) according to Claim 1, wherein a quotient between an internal resistance of each first energy storage cell (35) and a maximum amount of energy which can be stored in the latter is less than a quotient between an internal resistance of each second energy storage cell (45) and a maximum amount of energy which can be stored in the latter.

3. Battery system (10; 100) according to either of Claims 1 and 2, wherein the inverter (50; 150) is an NPC inverter having three voltage levels.

4. Battery system (10; 100) according to one of the preceding claims, wherein, if an electric motor (60) is connected at the output end to the inverter (50; 150), the electric motor (60) can be used to provide a torque (M), the torque values of which are between zero and a maximum torque value (Mm), and the electric motor (60) can be operated at a speed (N), the speed values of which are between zero and a maximum speed value (Nm), wherein, in the first functional mode, the torque values which can be assumed by the torque (M) are in a range of torque values between a positive first torque limit value (M1) and the maximum torque value (Mm) and the speed values which can be assumed by the speed (N) are in a range of speed values between zero and a positive first speed limit value (N1), and/or, in the second functional mode, the torque values which can be assumed by the torque (M) are in a range of torque values between zero and a positive second torque limit value (M2) and the speed values which can be assumed by the speed (N) are in a range of speed values between zero and a positive second speed limit value (N2), and/or, in a third functional mode, the torque values which can be assumed by the torque (M) are in a range of torque values between zero and the maximum torque value (Mm) and the speed values which can be assumed by the speed (N) are in a range of speed values between a positive third speed limit value (N3) and the maximum speed value (Nm).

5. Battery system (10; 100) according to Claim 4, wherein the second torque limit value (M2) is greater than the first torque limit value (M1), and/or the second speed limit value (N2) is greater than the first speed limit value (N1), and/or the third speed limit value (N3) is less than the second speed limit value (N2) and/or less than the first speed limit value (N1).

6. Battery system (100) according to one of Claims 1 to 5, wherein the first semiconductor switches (T1,...,T12) convert the DC voltage (GS1) applied to the inverter (150) at the input end and provided by the first energy storage source (30) into the AC voltage applied to the output end in the first functional mode, the second semiconductor switches (M1,...,M12) convert the DC voltage (GS2) applied to the inverter (150) at the input end and provided by the second energy storage source (40) into the AC voltage applied to the output end in the second functional mode, and the first semiconductor switches (T1,...,T12) and/or the second semiconductor switches (M1,...,M12) convert the DC voltage (GS3) applied to the inverter (150) at the input end and provided by the series circuit of the first energy storage source (30) and the second energy storage source (40) into the AC voltage applied to the output end in the third functional mode.

7. Method for operating an inverter (50; 150) which is designed to convert a DC voltage (GS1, GS2, GS3) applied to the input end into an AC voltage, in particular a polyphase AC voltage, applied to the output end, wherein the inverter (50; 150) is connected at the input end to a hybrid battery (20) which comprises a first energy storage source (30) having a plurality of first energy storage cells (35) and a second energy storage source (40) which is connected in series with the first energy storage source (30) and has a plurality of second energy storage cells (45) formed differently from the first energy storage cells (35), wherein the inverter (50; 150) is operated in a first functional mode, in which it converts a DC voltage (GS1) applied to the input end and provided by the first energy storage source (30) into the AC voltage applied to the output end, or the inverter (50; 150) is operated in a second functional mode, in which it converts a DC voltage (GS2) applied to the input end and provided by the second energy storage source (40) into the AC voltage applied to the output end, or the inverter (50; 150) is operated in a third functional mode, in which it converts a DC voltage (GS3) applied to the input end and provided by a series circuit of the first energy storage source (30) and the second energy storage source (40) into the AC voltage applied to the output end, by controlling a plurality of semiconductor switches (M1,...,M12; T1,...,T12, M1,...,M12) of the inverter (50; 150), wherein the plurality of semiconductor switches (T1,...,T12, M1,...,M12) are arranged in a first group of semiconductor switches having a plurality of first semiconductor switches (T1,...,T12) each designed to switch a DC voltage in a first DC voltage range and in a second group of semiconductor switches having a plurality of second semiconductor switches (M1,...,M12) each designed to switch a DC voltage in a second DC voltage range different from the first DC voltage range, wherein, in order to operate the inverter (150) in each functional mode, the corresponding DC voltage (GS1, GS2, GS3) applied to the inverter (150) is converted into the AC voltage applied to the output end by means of the semiconductor switches in that group of semiconductor switches whose semiconductor switches are each designed to switch a DC voltage which is currently to be switched and is dependent on a current DC voltage value of the DC voltage (GS1, GS2, GS3) to be converted, **characterized in that** each first semiconductor switch (T1,...,T12) is assigned a second semiconductor switch (M1,...,M12) connected in parallel with it.

8. Method according to Claim 7, wherein a quotient between an internal resistance of each first energy storage cell (35) and a maximum amount of energy which can be stored in the latter is less than a quotient between an internal resistance of each second energy storage cell (45) and a maximum amount of energy which can be stored in the latter.

9. Method according to either of Claims 7 and 8, wherein an electric motor (60) is connected at the output end to the inverter (50; 150) and can be used to provide a torque (M), the torque values of which are between zero and a maximum torque value (Mm), and can be operated at a speed (N), the speed values of which are between zero and a maximum speed value (Nm), wherein, in the first functional mode, the torque values which can be assumed by the torque (M) are in a range of torque values between a positive first torque limit value (M1) and the maximum torque value (Mm) and the speed values which can be assumed by the speed (N) are in a range of speed values between zero and a positive first speed limit value (N1), and/or, in the second functional mode, the torque values which can be assumed by the torque (M) are in a range of torque values between zero and a positive second torque limit value (M2) and the speed values which can be assumed by the speed (N) are in a range of speed values between zero and a positive second speed limit value (N2), and/or, in the third functional mode, the torque values which can be assumed by the torque (M) are in a range of torque values between zero and the maximum torque value (Mm) and the speed values which can be assumed by the speed (N) are in a range of speed values between a positive third speed limit value (N3) and the maximum speed value (Nm).

10. Method according to Claim 9, wherein the second torque limit value (M2) is greater than the first torque limit value (M1), and/or the second speed limit value (N2) is greater than the first speed limit value (N1), and/or the third speed limit value (N3) is less than the second speed limit value (N2) and/or less than the first speed limit value (N1).

11. Method according to one of Claims 7 to 10, wherein the first semiconductor switches (T1,...,T12) are used to convert the DC voltage (GS1) applied to the inverter (150) at the input end and provided by the first energy storage source (30) into the AC voltage applied to the output end in the first functional mode, the second semiconductor switches (M1,...,M12) are used to convert the DC voltage (GS2) applied to the inverter (150) at the input end and provided by the second energy storage source (40) into the AC voltage applied to the output end in the second functional mode, and the first semiconductor switches (T1,...,T12) and/or the second semiconductor switches (M1,...,M12) are used to convert the DC voltage (GS3) applied to the inverter (150) at the input end and provided by the series circuit of the first energy storage source (30) and the second energy storage source (40) into the AC voltage applied to the output end in the third functional mode.

12. Vehicle having a battery system (10; 100) according to one of Claims 1 to 6 and having an electric motor (60), wherein the electric motor (60) is connected at the output end to the inverter (50; 150) of the battery system (10; 100) and can be operated using an AC voltage, in particular a polyphase AC voltage, provided at the output end by the inverter (50; 150).

## Revendications

1. Système de batterie (10 ; 100) comprenant une batterie hybride (20), laquelle comprend une première source d'accumulation d'énergie (30) pourvue de premières cellules d'accumulation d'énergie (35) et une deuxième source d'accumulation d'énergie (40) branchée en série avec la première source d'accumulation d'énergie (30) et pourvue de plusieurs deuxièmes cellules d'accumulation d'énergie (45) configurées différemment des premières cellules d'énergie (35), et un onduleur (50 ; 150) dont l'entrée est reliée à la batterie (20) et qui est configuré pour convertir une tension continue (GS1, GS2, GS3) appliquée du côté de l'entrée en une tension alternative, notamment multiphasée, présente du côté de la sortie, le système de batterie (10 ; 100) comprenant une unité de commande qui est configurée pour, en commandant plusieurs commutateurs à semiconducteur (M1, ..., M12 ; T1, ..., T12, M1, ..., M12) de l'onduleur (50 ; 150), faire fonctionner l'onduleur (50 ; 150) dans un premier mode de fonctionnement dans lequel celui-ci convertit une tension continue (GS1) appliquée du côté de l'entrée et délivrée par la première source d'accumulation d'énergie (30) en la tension alternative présente du côté de la sortie, ou faire fonctionner l'onduleur (50 ; 150) dans un deuxième mode de fonctionnement dans lequel celui-ci convertit une tension continue (GS2) appliquée du côté de l'entrée et délivrée par la deuxième source d'accumulation d'énergie (40) en la tension alternative présente du côté de la sortie, ou faire fonctionner l'onduleur (50 ; 150) dans un troisième mode de fonctionnement dans lequel celui-ci convertit une tension continue (GS3) appliquée du côté de l'entrée et délivrée par le circuit série de la première source d'accumulation d'énergie (30) et de la deuxième source d'accumulation d'énergie (40) en la tension alternative présente du côté de la sortie, les plusieurs commutateurs à semiconducteur (T1, ..., T12, M1, ..., M12) étant disposés dans un premier groupe de commutateurs à semiconducteur comprenant plusieurs premiers commutateurs à semiconducteur (T1, ..., T12), lesquels sont respectivement conçus pour commuter une première tension continue se trouvant dans une première plage de tensions continues, et dans un deuxième groupe de commutateurs à semiconducteur comprenant plusieurs deuxièmes commutateurs à semiconducteur (M1, ..., M12), lesquels sont respectivement conçus pour commuter une deuxième tension continue se trouvant dans une deuxième plage de tensions continues différente de la première plage de tensions continues, l'unité de commande étant conçue pour, en vue de faire fonctionner l'onduleur (150) dans chaque mode de fonctionnement, convertir la tension continue (GS1, GS2, GS3) appliquée du côté de l'entrée la tension alternative présente du côté de la sortie respectivement au moyen du commutateur à semiconducteur du groupe de commutateurs à semiconducteur dont les commutateurs à semiconducteur sont respectivement conçus pour commuter une tension continue actuelle à commuter, laquelle est dépendante d'une valeur de tension continue actuelle de la tension continue (GS1, GS2, GS3) à convertir, **caractérisé en ce qu'**un deuxième commutateur à semiconducteur (M1, ..., M12) est associé à chaque premier commutateur à semiconducteur (T1, ..., T12) en étant branché en parallèle avec celui-ci.

2. Système de batterie (10 ; 100) selon la revendication 1, un quotient entre une résistance interne de chaque première cellule d'accumulation d'énergie (35) et une quantité d'énergie maximale pouvant être accumulée par celle-ci étant inférieur à un quotient entre une résistance interne de chaque deuxième cellule d'accumulation d'énergie (45) et une quantité d'énergie maximale pouvant être accumulée par celle-ci.

3. Système de batterie (10 ; 100) selon l'une des revendications 1 ou 2, l'onduleur (50 ; 150) étant un onduleur NPC avec trois niveaux de tension.

4. Système de batterie (10 ; 100) selon l'une des revendications précédentes, avec lequel, dans le cas d'un moteur électrique (60) raccordé à l'onduleur (50 ; 150) du côté de la sortie, un couple (M) peut être délivré au moyen du moteur électrique (60), dont les valeurs de couple sont comprises entre zéro et une valeur de couple maximale (Mm), et le moteur électrique (60) peut fonctionner à une vitesse de rotation (N) dont les valeurs de vitesse de rotation sont comprises entre zéro et une valeur de vitesse de rotation maximale (Nm), dans le premier mode de fonctionnement, les valeurs de couple pouvant être adoptées par le couple (M) se trouvant dans une plage de valeurs de couple qui s'étend entre une première valeur limite de couple positive (M1) et la valeur de couple maximale (Mm), et les valeurs de vitesse de rotation pouvant être adoptées par la vitesse de rotation (N) se trouvant dans une plage de valeurs de vitesse de rotation qui s'étend entre zéro et une première valeur limite de vitesse de rotation positive (N1), et/ou dans le deuxième mode de fonctionnement, les valeurs de couple pouvant être adoptées par le couple (M) se trouvant dans une plage de valeurs de couple qui s'étend entre zéro et une deuxième valeur limite de couple positive (M2), et les valeurs de vitesse de rotation pouvant être adoptées par la vitesse de rotation (N) se trouvant dans une plage de valeurs de vitesse de rotation qui s'étend entre zéro et une deuxième valeur limite de vitesse de rotation positive (N2), et/ou dans le troisième mode de fonctionnement, les valeurs de couple pouvant être adoptées par le couple (M) se trouvant dans une plage de valeurs de couple qui s'étend entre zéro et la valeur de couple maximale (Mm), et les valeurs de vitesse de rotation pouvant être adoptées par la vitesse de rotation (N) se trouvant dans une plage de valeurs de vitesse de rotation qui s'étend entre une troisième valeur limite de vitesse de rotation positive (N3) et la valeur de vitesse de rotation maximale (Nm).

5. Système de batterie (10 ; 100) selon la revendication 4, la deuxième valeur limite de couple (M2) étant supérieure à la première valeur limite de couple (M1) et/ou la deuxième valeur limite de vitesse de rotation (N2) étant supérieure à la première valeur limite de vitesse de rotation (N1) et/ou la troisième valeur limite de vitesse de rotation (N3) étant inférieure à la deuxième valeur limite de vitesse de rotation (N2) et/ou inférieure à la première valeur limite de vitesse de rotation (N1).

6. Système de batterie (100) selon l'une des revendications 1 à 5, avec lequel, dans le premier mode de fonctionnement, les premiers commutateurs à semiconducteur (T1, ..., T12) convertissent la tension continue (GS1) appliquée du côté de l'entrée de l'onduleur (150) et délivrée par la première source d'accumulation d'énergie (30) en la tension alternative présente du côté de la sortie, dans le deuxième mode de fonctionnement, les deuxièmes commutateurs à semiconducteur (M1, ..., M12) convertissent la tension continue (GS2) appliquée du côté de l'entrée de l'onduleur (150) et délivrée par la deuxième source d'accumulation d'énergie (40) en la tension alternative présente du côté de la sortie et, dans le troisième mode de fonctionnement, les premiers commutateurs à semiconducteur (T1, ..., T12) et/ou les deuxièmes commutateurs à semiconducteur (M1, ..., M12) convertissent la tension continue (GS3) appliquée du côté de l'entrée de l'onduleur (150) et délivrée par le circuit série de la première source d'accumulation d'énergie (30) et de la deuxième source d'accumulation d'énergie (40) en la tension alternative présente du côté de la sortie.

7. Procédé pour faire fonctionner un onduleur (50 ; 150), lequel est configuré pour convertir une tension continue (GS1, GS2, GS3) appliquée du côté de l'entrée en une tension alternative, notamment multiphasée, présente du côté de la sortie, l'onduleur (50 ; 150) étant relié du côté de l'entrée à une batterie hybride (20), laquelle comprend une première source d'accumulation d'énergie (30) pourvue de plusieurs premières cellules d'accumulation d'énergie (35) et d'une deuxième source d'accumulation d'énergie (40) branchée en série avec la première source d'accumulation d'énergie (30) et pourvue de plusieurs deuxièmes cellules d'accumulation d'énergie (45) configurées différemment des premières cellules d'énergie (35), procédé selon lequel, en commandant plusieurs commutateurs à semiconducteur (M1, ..., M12 ; T1, ..., T12, M1, ..., M12) de l'onduleur (50 ; 150), l'onduleur (50 ; 150) fonctionne dans un premier mode de fonctionnement dans lequel celui-ci convertit une tension continue (GS1) appliquée du côté de l'entrée et délivrée par la première source d'accumulation d'énergie (30) en la tension alternative présente du côté de la sortie, ou l'onduleur (50 ; 150) fonctionne dans un deuxième mode de fonctionnement dans lequel celui-ci convertit une tension continue (GS2) appliquée du côté de l'entrée et délivrée par la deuxième source d'accumulation d'énergie (40) en la tension alternative présente du côté de la sortie, ou l'onduleur (50 ; 150) fonctionne dans un troisième mode de fonctionnement dans lequel celui-ci convertit une tension continue (GS3) appliquée du côté de l'entrée et délivrée par le circuit série de la première source d'accumulation d'énergie (30) et de la deuxième source d'accumulation d'énergie (40) en la tension alternative présente du côté de la sortie, les plusieurs commutateurs à semiconducteur (T1, ..., T12, M1, ..., M12) étant disposés dans un premier groupe de commutateurs à semiconducteur comprenant plusieurs premiers commutateurs à semiconducteur (T1, ..., T12), lesquels sont respectivement conçus pour commuter une première tension continue se trouvant dans une première plage de tensions continues, et dans un deuxième groupe de commutateurs à semiconducteur comprenant plusieurs deuxièmes commutateurs à semiconducteur (M1, ..., M12), lesquels sont respectivement conçus pour commuter une deuxième tension continue se trouvant dans une deuxième plage de tensions continues différente de la première plage de tensions continues, procédé selon lequel, en vue de faire fonctionner l'onduleur (150) dans chaque mode de fonctionnement, la tension continue (GS1, GS2, GS3) correspondante appliquée à l'onduleur (150) est convertie en la tension alternative présente du côté de la sortie au moyen du commutateur à semiconducteur du groupe de commutateurs à semiconducteur dont les commutateurs à semiconducteur sont respectivement conçus pour commuter une tension continue actuelle à commuter, laquelle est dépendante d'une valeur de tension continue actuelle de la tension continue (GS1, GS2, GS3) à convertir, **caractérisé en ce qu'**un deuxième commutateur à semiconducteur (M1, ..., M12) est associé à chaque premier commutateur à semiconducteur (T1, ..., T12) en étant branché en parallèle avec celui-ci.

8. Procédé selon la revendication 7, un quotient entre une résistance interne de chaque première cellule d'accumulation d'énergie (35) et une quantité d'énergie maximale pouvant être accumulée par celle-ci étant inférieur à un quotient entre une résistance interne de chaque deuxième cellule d'accumulation d'énergie (45) et une quantité d'énergie maximale pouvant être accumulée par celle-ci.

9. Procédé selon l'une des revendications 7 ou 8, un moteur électrique (60) étant raccordé à l'onduleur (50 ; 150) du côté de la sortie, au moyen duquel peut être délivré un couple (M) dont les valeurs de couple sont comprises entre zéro et une valeur de couple maximale (Mm), et lequel peut fonctionner à une vitesse de rotation (N) dont les valeurs de vitesse de rotation sont comprises entre zéro et une valeur de vitesse de rotation maximale (Nm), procédé selon lequel, dans le premier mode de fonctionnement, les valeurs de couple pouvant être adoptées par le couple (M) se trouvent dans une plage de valeurs de couple qui s'étend entre une première valeur limite de couple positive (M1) et la valeur de couple maximale (Mm), et les valeurs de vitesse de rotation pouvant être adoptées par la vitesse de rotation (N) se trouvent dans une plage de valeurs de vitesse de rotation qui s'étend entre zéro et une première valeur limite de vitesse de rotation positive (N1), et/ou dans le deuxième mode de fonctionnement, les valeurs de couple pouvant être adoptées par le couple (M) se trouvent dans une plage de valeurs de couple qui s'étend entre zéro et une deuxième valeur limite de couple positive (M2), et les valeurs de vitesse de rotation pouvant être adoptées par la vitesse de rotation (N) se trouvent dans une plage de valeurs de vitesse de rotation qui s'étend entre zéro et une deuxième valeur limite de vitesse de rotation positive (N2), et/ou dans le troisième mode de fonctionnement, les valeurs de couple pouvant être adoptées par le couple (M) se trouvent dans une plage de valeurs de couple qui s'étend entre zéro et la valeur de couple maximale (Mm), et les valeurs de vitesse de rotation pouvant être adoptées par la vitesse de rotation (N) se trouvent dans une plage de valeurs de vitesse de rotation qui s'étend entre une troisième valeur limite de vitesse de rotation positive (N3) et la valeur de vitesse de rotation maximale (Nm).

10. Procédé selon la revendication 9, la deuxième valeur limite de couple (M2) étant supérieure à la première valeur limite de couple (M1) et/ou la deuxième valeur limite de vitesse de rotation (N2) étant supérieure à la première valeur limite de vitesse de rotation (N1) et/ou la troisième valeur limite de vitesse de rotation (N3) étant inférieure à la deuxième valeur limite de vitesse de rotation (N2) et/ou inférieure à la première valeur limite de vitesse de rotation (N1).

11. Procédé selon l'une des revendications 7 à 10, selon lequel, dans le premier mode de fonctionnement, la tension continue (GS1) appliquée du côté de l'entrée de l'onduleur (150) et délivrée par la première source d'accumulation d'énergie (30) est convertie en la tension alternative présente du côté de la sortie au moyen des premiers commutateurs à semiconducteur (T1, ..., T12), dans le deuxième mode de fonctionnement, la tension continue (GS2) appliquée du côté de l'entrée de l'onduleur (150) et délivrée par la deuxième source d'accumulation d'énergie (40) est convertie en la tension alternative présente du côté de la sortie au moyen des deuxièmes commutateurs à semiconducteur (M1, ..., M12) et, dans le troisième mode de fonctionnement, la tension continue (GS3) appliquée du côté de l'entrée de l'onduleur (150) et délivrée par le circuit série de la première source d'accumulation d'énergie (30) et de la deuxième source d'accumulation d'énergie (40) est convertie en la tension alternative présente du côté de la sortie au moyen des premiers commutateurs à semiconducteur (T1, ..., T12) et/ou des deuxièmes commutateurs à semiconducteur (M1, ..., M12) .

12. Véhicule équipé d'un système de batterie (10 ; 100) selon l'une des revendications 1 à 6 et un moteur électrique (60), le moteur électrique (60) étant raccordé du côté de la sortie à l'onduleur (50 ; 150) du système de batterie (10 ; 100) et pouvant fonctionner au moyen d'une tension alternative, notamment multiphasée, délivrée par l'onduleur (50 ; 150) du côté de la sortie.
